# EUROPÄISCHE PATENTSCHRIFT

(11) **EP 3 099 542 B1**
(45) Veröffentlichungstag und Bekanntmachung des Hinweises auf die Patenterteilung: **15.04.2020**
(21) Anmeldenummer: 15701930.8
(22) Anmeldetag: 07.01.2015
(51) Int. Cl.: B60R 25/24, G07C 9/00

(54) **EMBLEM FÜR EIN KRAFTFAHRZEUG MIT EINEM SENSORSYSTEM SOWIE VERFAHREN HIERZU**
EMBLEM FOR A MOTOR VEHICLE, SAID EMBLEM COMPRISING A SENSOR SYSTEM, AND METHOD FOR SAME
LOGO POUR VÉHICULE À MOTEUR COMPORTANT UN SYSTÈME CAPTEUR, ET PROCÉDÉ CORRESPONDANT

(30) Priorität: 31.01.2014 DE 102014101198
(43) Veröffentlichungstag der Anmeldung: 07.12.2016
(73) Patentinhaber: Huf Hülsbeck & Fürst GmbH & Co. KG, 42551 Velbert (DE)
(72) Erfinder: SCHINDLER, Mirko, 42549 Velbert (DE); STICHERLING, Nadine, 45257 Essen (DE); MÖNIG, Stefan, 58332 Schwelm (DE); SCHUMACHER, Helmut, 48653 Coesfeld (DE); ZIEGLER, Alexander, 42489 Wülfrath (DE); LINDIC, Iko, 45149 Essen (DE); HACHE, Christof, 42551 Velbert (DE); MÜLLER, Oliver, 42551 Velbert (DE); HELLER, Norbert, 47929 Grefrath (DE); YOMKIL MALABO, Jean, 45139 Essen (DE); ETTE, Bernd, 38442 Wolfsburg (DE)
(74) Vertreter: Patentanwälte Bals & Vogel
(86) Internationale Anmeldenummer: PCT/DE2015/100008
(87) Internationale Veröffentlichungsnummer: WO 2015/113554

(56) Entgegenhaltungen:
- WO-A1-2013/037806
- DE-A1-102007 050 094
- DE-A1-102008 021 989
- DE-A1-102009 023 594
- DE-A1-102010 056 171
- DE-A1-102010 060 364
- DE-A1-102011 115 760
- DE-B3-102005 032 402

## Beschreibung

Die Erfindung betrifft ein Emblem für ein Kraftfahrzeug sowie ein Verfahren zur Auslösung eines Arbeitssignals für ein Kraftfahrzeug mit einem an einem Kraftfahrzeug befestigbaren Emblem.

Die DE 10 2010 060 364 A1 offenbart ein Verfahren zur Betätigung eines beweglichen Teils, insbesondere einer Klappe eines Kraftfahrzeugs. Weiter ist ein Emblem vorgesehen.

Aus dem Stand der Technik ist es bekannt, an einem Kraftfahrzeug an definierten Stellen ein Emblem, das beispielsweise ein Firmenkennzeichen, Logo, etc. trägt, anzuordnen. Zudem ist es bekannt, das sogenannte Emblem zusätzlich als Öffnungshilfe für eine Heckklappe zu verwenden, wobei das Emblem an der Karosserie bewegbar gelagert ist und der Benutzer über eine bewusste Handlung das Emblem bewegt bzw. verschwenkt, um die Heckklappe öffnen zu können. Des Weiteren ist es bekannt, hinter einem am Kraftfahrzeug schwenkbar gelagerten Emblem eine Kamera anzuordnen, die zur Bilderfassung des Rückraumes des Kraftfahrzeuges dienen kann, wobei die Bilderfassung erst bei Einlegung des Rückwärtsganges erfolgt. Diese Vorrichtung dient hierbei als Einparkhilfe. Die Kamera erfasst hierbei einen fest vorgegebenen Bereich an der Heckklappe, wobei die Bildinformationen in den Innenraum für den Fahrer geleitet werden.

Aufgabe der vorliegenden Erfindung ist es, ein Emblem für ein Kraftfahrzeug weiterzuentwickeln, wodurch die Funktionalität eines herkömmlichen Emblems, das lediglich als Firmenkennzeichnung dient, erhöht wird.

Die Aufgabe der vorliegenden Erfindung wird durch sämtliche Merkmale des Anspruches 1 gelöst. In den abhängigen Vorrichtungsansprüchen sind mögliche Weiterentwicklungen beschrieben.

Erfindungsgemäß weist das Emblem für ein Kraftfahrzeug ein Sensorsystem auf, das geeignet ist,
a) einen außerhalb des Kraftfahrzeuges liegenden Detektionsbereich zu überwachen,
b) im Falle eines Erkennens eines Benutzers im Detektionsbereich ein Signal für den Start einer Authentifizierungsüberprüfung zwischen einem ID-Geber und dem Kraftfahrzeug auszulösen,
c) einen außerhalb des Kraftfahrzeuges liegenden, sich vom Detektionsbereich unterscheidenden Betätigungsbereich zu überwachen,
d) im Falle eines Erkennens eines Benutzers im Betätigungsbereich ein Arbeitssignal für das Kraftfahrzeug bereitzustellen.

Das Emblem mit dem Sensorsystem stellt ein Montagemodul für das Kraftfahrzeug dar, das an definierten Positionen am Kraftfahrzeug angeordnet werden kann. Das Sensorsystem dient vorteilhafterweise für eine Zugangskontrolle und/oder eine Zugangserleichterung bei Kraftfahrzeugen, wobei das Sensorsystem eine Annäherung eines Objektes, insbesondere eines Benutzers, an das Kraftfahrzeug überwacht und erkennen kann. Hierzu kontrolliert das Sensorsystem einen Detektionsbereich, der insbesondere in seinen Dimensionen fest ist, im Bereich des Kraftfahrzeuges, in dem er den Benutzer oder das Objekt messtechnisch erfassen kann. Zusätzlich existiert ein Betätigungsbereich, vorteilhafterweise in dem Detektionsbereich, der dazu dient, zumindest eine Funktion am Kraftfahrzeug auszulösen, insbesondere die durch das Arbeitssignal getriggert wird. Dieses erfolgt nur dann, wenn eine entsprechende Betätigung des Betätigungsbereiches durch den Benutzer vom Sensorsystem wahrgenommen wird. Diese Funktion kann z. B. ein Öffnen und/oder Schließen einer Tür, Heckklappe sein. Weitere Funktionen sind ebenfalls denkbar. Befindet sich der Benutzer im Detektionsbereich, welches das Sensorsystem erkennt, erfolgt zunächst die Authentifizierungsüberprüfung zwischen dem ID-Geber, den der Benutzer bei sich trägt, und dem Kraftfahrzeug. Liegt eine positive Authentifizierungsüberprüfung vor, überwacht das Sensorsystem anschließend einen Betätigungsbereich, der sich vom Detektionsbereich in seiner Dimension unterscheiden kann, und im Falle eines Erkennens des Benutzers in dem genannten Betätigungsbereich kann das Sensorsystem ein Arbeitssignal für das Kraftfahrzeug bereitstellen, um eine Funktion am Kraftfahrzeug auszulösen. Die Überwachung des Detektionsbereiches, der Start der Authentifizierungsüberprüfung, die Überwachung des Betätigungsbereiches sowie das Bereitstellen des Arbeitssignals können über eine Kontrolleinheit des Sensorsystems erfolgen.

Dadurch, dass der Detektionsbereich überwacht wird und im Falle eines Erkennens des Benutzers im Detektionsbereich die Authentifizierungsüberprüfung gestartet wird, ist insbesondere keine aktive Handlung eines Benutzers notwendig, um den Start einer Authentifizierungsüberprüfung vorzunehmen. Vielmehr wird vorzugsweise von dem Benutzer unbemerkt der Start der Authentifizierungsüberprüfung eingeleitet. Somit kann vorgesehen sein, dass das Sensorsystem eine Passive-Keyless-Entry-Überprüfung einleitet. Unter einer Passive-Keyless-Entry-Überprüfung wird ein Verfahren verstanden, bei dem unbemerkt durch den Benutzer eine Authentifizierungsüberprüfung stattfindet. Die Authentifizierungsüberprüfung bei einer Passive-Keyless-Entry-Überprüfung muss der Benutzer nicht durch eine bewusste Handlung einleiten.

Vorteilhafterweise kann das optische Sensorsystem geeignet sein, ein am Sensorsystem angeordnetes Beleuchtungselement für einen ersten Beleuchtungszustand einzuschalten, falls die Authentifizierungsüberprüfung gemäß b) positiv ist. Denkbar ist, dass das Beleuchtungselement zunächst nicht aktiv ist, das bedeutet, ausgeschaltet ist und kein Licht für den Benutzer emittiert. Gelangt der Benutzer in den Detektionsbereich erfolgt zunächst eine Authentifizierungsüberprüfung. Ist die Authentifizierungsüberprüfung positiv, erst dann nimmt das Beleuchtungselement den ersten "aktiven" Beleuchtungszustand ein. Über den ersten Beleuchtungszustand des Beleuchtungselements wird der Benutzer visuell aufgefordert, eine bewusste Handlung im Betätigungsbereich, insbesondere im Bereich des Beleuchtungselements durchzuführen und/oder auszuführen, damit das Arbeitssignal für das Kraftfahrzeug bereitgestellt werden kann. Besonders vorteilhaft ist, dass lediglich ein Sensorsystem für die Überwachung des Detektionsbereiches und des Betätigungsbereiches zuständig ist.

Weiterhin kann erfindungswesentlich sein, dass das Sensorsystem geeignet ist, einen außerhalb des Kraftfahrzeuges liegenden, sich vom Detektionsbereich unterscheidenden Betätigungsbereich zu überwachen, wobei das Beleuchtungselement in einem zweiten Beleuchtungszustand sich befindet, der sich vom ersten Beleuchtungszustand unterscheidet. Der Betätigungsbereich ist in der Regel kleiner dimensioniert als der Detektionsbereich, wobei vorteilhafterweise der Betätigungsbereich zumindest teilweise innerhalb des Detektionsbereichs liegt. Bei der Überwachung des Betätigungsbereichs durch das Sensorsystem kann das Beleuchtungselement in den zweiten Beleuchtungszustand wechseln. Der Wechsel vom ersten Beleuchtungszustand zum zweiten Beleuchtungszustand kann z. B. zeitlich fest definiert sein. Beispielsweise ist es denkbar, dass der Benutzer während des ersten Beleuchtungszustandes des Beleuchtungselements ein Körperteil in den Betätigungsbereich, insbesondere an das Beleuchtungselement hält. Nach einer definierten Zeit wechselt das Beleuchtungselement in den zweiten Beleuchtungszustand, der beispielsweise den Benutzer animieren soll, eine weitere bewusste Handlung innerhalb des Betätigungsbereiches auszuführen, insbesondere seine Hand wegzunehmen oder sich mit dem gesamten Benutzerkörper dem Beleuchtungselement ein wenig, insbesondere einen Schritt zu entfernen. Führt der Benutzer diese bewusste Handlung aus, und zwar innerhalb einer vorgegebenen Zeit, erfolgt die Bereitstellung des Arbeitssignals für das Kraftfahrzeug. Anderenfalls wird das Arbeitssignal für das Kraftfahrzeug nicht ausgelöst.

Zudem ist es erfindungsgemäß vorgesehen, dass das Sensorsystem als optisches Sensorsystem ausgebildet ist,
wobei das Sensorsystem einen optischen Sensor und ein Lichtmodul aufweist, mit dem Licht emittierbar ist, um einen Detektionsbereich entstehen zu lassen, wobei der Sensor ausgebildet ist, Licht aus dem Detektionsbereich und/oder dem Betätigungsbereich zu empfangen, wobei der Detektionsbereich für den Benutzer nicht sichtbar ist. Darüber hinaus kann das Lichtmodul eine Vielzahl an Lichtquellen aufweisen. Das Sensorsystem überwacht hierbei den Detektionsbereich, und zwar auch, wenn gleichzeitig der Betätigungsbereich überwacht wird. Durch den Einsatz eines Sensorsystems kann das Erkennen eines Benutzers auf den vorgegebenen, als Raumabschnitt abgrenzbaren Detektionsbereich außerhalb des Kraftfahrzeuges festgelegt sein. Die größeren Formen des Detektionsbereichs ergeben sich aus dem Aufbau des Sensorsystems. Hierbei ist z. B. möglich, den Detektionsbereich so festzulegen, dass der Benutzer vor Einleitung einer Arbeitssignalauslösung im Detektionsbereich erkannt wird. Der Benutzer kann somit frühzeitiger als bei Verwendung aus dem Stand der Technik bekannten kapazitiven Sensors erkannt werden. Andererseits ist es möglich, den Detektionsbereich auf einen vorgegebenen Abschnitt zu beschränken, was z. B. bei einer Verwendung eines Hochfrequenzsignals zum Erkennen eines Benutzers, welches im Stand der Technik auch seine Verwendung findet, nicht möglich wäre. Somit können nur Benutzer, die sich nahe dem Sensorsystem befinden, erkannt werden. Somit kann durch den vom Sensorsystem festgelegten Detektionsbereich ein Benutzer zum einen frühzeitig und zum anderen sehr gezielt erkannt werden. Das Licht dient dazu, den Detektionsbereich entstehen zu lassen, wobei das Lichtmodul ein Linsensystem aufweisen kann. Es kann vorgesehen sein, dass der Detektionsbereich für den Benutzer unsichtbar ist. Hierzu emittiert das Lichtmodul Licht im nicht sichtbaren Bereich. Insbesondere kann es sich bei dem Licht um Infrarotstrahlen handeln. Das Lichtmodul kann nur eine Lichtquelle aufweisen. Alternativ kann das Lichtmodul mehrere Lichtquellen aufweisen. Die Lichtquellen können um den optischen Sensor angeordnet sein. So können z. B. Lichtquellen links und rechts, oberhalb oder unterhalb vom optischen Sensor angeordnet sein. Alternativ können die Lichtquellen um den Umfang des optischen Sensors herum angeordnet sein. Bei dem Licht kann es sich um Laserlicht handeln.

Das Sensorsystem weist einen optischen Sensor auf. Der optische Sensor kann ausgebildet sein, Licht aus dem Detektionsbereich zu empfangen. Der optische Sensor nimmt Bilder des Detektionsbereichs und des Betätigungsbereichs, der am Beleuchtungselement angeordnet ist, auf. Jedes Bild kann insbesondere aus einer Gesamtzahl von Pixeln zusammengesetzt sein. Der optische Sensor kann einen Bildsensor aufweisen, der die Gesamtzahl der Pixel aufweist. Der Bildsensor kann ein CMOS-Sensor und/oder ein LDPD-Sensor sein. Der LDPD-Sensor (Lateral Drift Field Photodetector) ist geeignet, besonders schnell ausgewertet zu werden sowie wenig Energie zu verbrauchen.

Vorteilhafterweise kann der Betätigungsbereich in der Nähe, benachbart und/oder beabstandet zum Beleuchtungselement liegen, wobei insbesondere das Beleuchtungselement ringartig und/oder sternartig ausgebildet ist. In Abhängigkeit vom Emblem kann das Beleuchtungselement weitere geometrische Formen aufweisen. Die Farbe der Beleuchtungszustände kann ebenfalls unterschiedlich sein, das bedeutet, dass der erste Beleuchtungszustand eine erste Farbe aufweist und der zweite Beleuchtungszustand eine zweite Farbe aufweist.

Zudem kann erfindungsgemäß vorgesehen sein, dass gemäß d) im Falle eines Erkennens eines Benutzers im Betätigungsbereich das Sensorsystem geeignet ist, das Beleuchtungselement in einen dritten Beleuchtungszustand einzuschalten, der sich von dem ersten und/oder dem zweiten Beleuchtungszustand unterscheidet. Falls nun der Benutzer am Betätigungsbereich, insbesondere am Beleuchtungselement seinen Benutzungswillen in Form einer definierten Körperbewegung oder Handbewegung kundgetan hat, ist es denkbar, dass das Beleuchtungselement in den dritten Beleuchtungszustand verfällt. Der dritte Beleuchtungszustand kann für den Benutzer ein Hinweissignal sein, dass beispielsweise die entsprechende Funktion am Kraftfahrzeug ausgeführt wird, das bedeutet, dass z. B. die Kraftfahrzeugtür oder die Heckklappe sich automatisch öffnet.

Denkbar ist, dass das Beleuchtungselement sichtbares Licht emittiert, um den Betätigungsbereich zu schaffen. In diesem Fall befindet sich der Betätigungsbereich am Beleuchtungselement bzw. nahe des Beleuchtungselements bzw. in unmittelbarer Nähe des Emblems. Alternativ ist es ebenfalls denkbar, dass ein Anzeigeelement vorgesehen ist, um den Betätigungsbereich entstehen zu lassen, wobei insbesondere der Betätigungsbereich für den Benutzer sichtbar ist. Das Anzeigeelement kann dazu ausgebildet sein, den sichtbaren Betätigungsbereich an der Bodenfläche zu erzeugen. Ebenfalls ist es denkbar, dass mehrere Betätigungsbereiche vorhanden sind und in jedem Betätigungsbereich der Benutzer den Benutzerwillen zeigen muss, damit der Benutzerwille erkannt wird und das Arbeitssignal bereitgestellt wird.

Vorzugsweise wird im Schritt d) der Benutzerwille durch eine vordefinierte Bewegung erkannt. Bei der vordefinierten Bewegung kann es sich um die Bewegung eines Körperteils des Benutzers im oder am Betätigungsbereich, insbesondere am Beleuchtungselement handeln. Bei der vordefinierten Handlung kann es sich zusätzlich oder alternativ um die Bewegung eines Körperteils des Benutzers in dem Betätigungsbereich und/oder aus dem Betätigungsbereich handeln. Das Körperteil kann ein Fuß, eine Hand des Benutzers oder der gesamt Benutzer sein. Es kann auch sein, dass die vordefinierte Bewegung genauer festgelegt ist, beispielsweise dass die vordefinierte Bewegung einer vorgegebenen Gestik entspricht.

Vorzugsweise muss die Erkennung des Benutzerwillens im Schritt d) die vordefinierte Bewegung innerhalb einer Betätigungsdauer b) erfolgen. Erfolgt die vordefinierte Bewegung nach der Betätigungsdauer b), so wird ein Arbeitssignal bereitgestellt. Anderenfalls wird kein Arbeitssignal für das Kraftfahrzeug getriggert, um eine definierte Funktion am Kraftfahrzeug auszulösen.

Das optische Sensorsystem ist derart konfiguriert, dass während der Bewachung des Detektionsbereichs und/oder des Betätigungsbereichs eine Messung des Abstandes des Benutzers zum Sensorsystem durchgeführt wird, um die Bewegung im Detektionsbereich und/oder im Betätigungsbereich erkennen zu können. Das bedeutet, dass der Benutzer im Detektionsbereich und/oder im Betätigungsbereich nur erkannt wird, wenn das Objekt bzw. der Benutzer sich in dem Detektionsbereich und/oder dem Betätigungsbereich dem Sensorsystem und/oder dem Kraftfahrzeug annähert. Das heißt, es ist nicht nur eine reine Bewegung des Objektes im Detektionsbereich und/oder im Betätigungsbereich ausreichend, um das Signal für den Start der Authentifizierungsüberprüfung oder der Bereitstellung des Arbeitssignals auszulösen. Nur wenn sich der Abstand des Benutzers zum Sensorsystem und/oder zum Kraftfahrzeug verändert, wird ein Signal gemäß Schritt b) oder gemäß Schritt d) ausgelöst. Hierzu wird der Abstand des Benutzers zum optischen Sensor über mindestens zwei zeitlich hintereinander aufgenommenen Bildern, insbesondere Erkennungsbildern gemessen. Zur Messung des Abstandes kann eine Time of Flight-Messung durchgeführt werden. Die Anforderungen an das Erkennen eines Benutzers in Schritt b) und Schritt d), das heißt, die Detektionsdauer, die Größe des Objektes, die Bewegung des Objektes, die Annäherung des Objektes können beliebig kombiniert werden. So kann es beispielsweise sein, dass das Objekt bzw. der Benutzer eine vorgegebene Größe haben und sich dem optischen Sensor annähern muss, um als Benutzer erkannt zu werden und ein Signal für den Start einer Authentifizierungsüberprüfung oder einer Auslösung eines Arbeitssignals zu triggern.

Das Emblem kann z.-B. dadurch ausgebildet sein, so eingebaut zu werden, dass sich der Detektionsbereich zumindest teilweise oberhalb einer Bodenfläche, auf der das Kraftfahrzeug steht, befindet, hierdurch ist der Detektionsbereich nicht nur auf einen geringen Teilbereich einer Bodenfläche vor einem Kraftfahrzeug beschränkt. Es kann sein, dass der Detektionsbereich in Kraftfahrzeugnähe oberhalb der Bodenfläche beginnt und dann schräg bis zu Erreichen der Bodenfläche verläuft. Hierbei endet der Detektionsbereich an der Bodenfläche. Alternativ kann der Detektionsbereich zumindest teilweise oberhalb der Bodenfläche enden. In einer besonderen Ausführungsform befindet sich der Detektionsbereich vollständig oberhalb der Bodenfläche. Ein Ende des Detektionsbereich kann sich in diesem Fall durch eine zu geringe Lichtintensität, mit der der Detektionsbereich beleuchtet wird, in einer gewissen Entfernung zum Sensorsystem ergeben.

Vorzugsweise kann sich in einer Draufsicht der Detektionsbereich zum optischen Sensorsystem hin verkleinern. Hierdurch werden gezielt nur Benutzer erkannt, die sich voraussichtlich dem Sensorsystem und/oder dem Kraftfahrzeug nähern werden.

Es kann vorgesehen sein, dass das Emblem zur Anordnung am Kraftfahrzeugheck, z. B. in einer Heckklappe, ausgebildet ist. Alternativ oder zusätzlich kann das Emblem geeignet sein, auch an einer Fahrzeugseite, z. B. in einer B-Säule, befestigt zu werden. Hierdurch können unterschiedliche Detektionsbereiche, in denen sich üblicherweise ein Benutzer dem Kraftfahrzeug annähert, mit dem Sensorsystem überwacht werden.

Insbesondere kann der Detektionsbereich durch die Überlagerung von einem Sendebereich des Lichtmoduls und einem Empfangsbereich des optischen Sensors gebildet sein. Der Sendebereich des Lichtmoduls ergibt sich aus dem Bereich, in dem das Lichtmodul Licht von ausreichender Intensität emittiert. Der Empfangsbereich ergibt sich aus dem Bereich, aus dem der optische Sensor Licht empfangen kann. Der Sendebereich des Lichtmoduls kann aus den Sendebereichen der einzelnen Lichtquellen zusammengesetzt sein. Alternativ kann der Sendebereich auf die Überlagerung der Sendebereiche der einzelnen Lichtquellen beschränkt sein.

Das Sensorsystem weist ferner die Kontrolleinheit zum Auswerten des optischen Sensors auf. Die Kontrolleinheit kann dazu ausgebildet sein, Bilder auszuwerten, die vom optischen Sensor aufgenommen worden sind. Hierbei kann es sich um Bilder des Detektionsbereichs und/oder des Betätigungsbereichs handeln.

Es kann vorgesehen sein, dass der optische Sensor einen Infrarotfilter und/oder einen Polarisationsfilter aufweist. Hierdurch kann zumindest ein Teil eines Störlichts herausgefiltert werden. Bei dem Störlicht kann es sich beispielsweise um Sonnenlicht oder um Licht einer künstlichen Lichtquelle, z. B. Garagenlicht, handeln. Ebenfalls kann das Lichtmodul einen Polarisationsfilter aufweisen.

Es kann sein, dass das Sensorsystem ausgebildet ist, Erkennungsbilder und Vergleichsbilder aufzunehmen und gegebenenfalls auszuwerten. Erkennungsbilder entstehen mit Hilfe der Reflexion des emittierten Lichtes des Lichtmoduls. Vergleichsbilder entstehen nur mit Hilfe des Störlichts. Zum Entstehen der Vergleichsbilder emittiert das Lichtmodul kein Licht. Die Überwachungseinheit bzw. die Kontrolleinheit kann durch Vergleich eines Erkennungsbildes und eines Vergleichsbildes das Störlicht erkennen. Die Kontrolleinheit kann hierdurch ein modifiziertes Erkennungsbild generieren, aus dem das Störlicht entfernt ist. Das Sensorsystem kann so ausgebildet sein, dass jeweils nach einer vorgegebenen Anzahl von Erkennungsbildern ein Vergleichsbild aufgenommen wird.

Vorteilhafterweise weist das Lichtmodul und/oder die Lichtquelle zum optischen Sensor einen Abstand a) auf. Vorzugsweise ist der Abstand a) gering gewählt. So kann es sein, dass der Abstand a) in einem Bereich von 0 cm ≤ a ≤ 5 cm, bevorzugt 1 cm ≤ a ≤ 3 cm, besonders bevorzugt a ≈ 2 cm aufweist. Hierdurch ist es möglich, dass möglichst viele Lichtstrahlen des Lichtmoduls auch im Empfangsbereich des optischen Sensors gelangen, sodass das Lichtmodul Licht einer geringen Intensität emittieren muss. Hierdurch muss das Lichtmodul eine geringe elektrische Leistung aufnehmen.

Es kann sein, dass das Sensorsystem zwischen einem Ruhemodus und einem Arbeitsmodus schaltbar ist. Hierdurch kann das Sensorsystem im Ruhemodus eine geringere elektrische Leistung erfordern als im Arbeitsmodus.

Ebenfalls ist es denkbar, die Auflösung des optischen Sensors gering zu wählen. Z. B. kann ein optischer Sensor gewählt werden, der nur eine Pixelanzahl enthält, durch die ein gewünschtes Objekt, z. B. ein Benutzer oder ein Körperteil eines Benutzers, im Detektionsbereich minimal mit nur zwei Pixel emittiert werden kann. Bei dem Körperteil kann es sich um eine Hand oder einen Fuß eines Benutzers handeln. Beispielsweise kann der Bildsensor des optischen Sensors zwischen 500 und 1.500 Pixel enthalten. Auch durch den Einsatz des bereits beschriebenen LDPD-Sensors kann elektrische Leistung eingespart werden, da der LDPD-Sensor für den Einsatz bei geringer Lichtintensität geeignet ist, sodass auch ein Lichtmodul mit einer geringen elektrischen Leistung verwendet werden kann.

Alternativ oder zusätzlich ist es denkbar, dass die Kontrolleinheit dazu ausgebildet ist, im Schritt b) und/oder im Schritt d) während der Überwachung des Detektionsbereiches und/oder des Betätigungsbereiches nur einen Teil des vom optischen Sensor aufgenommenen Bildes auszuwerten. Hierdurch benötigt die Kontrolleinheit eine geringe elektrische Leistung. Die Kontrolleinheit wertet insbesondere nur eine Anzahl Pixel aus, die geringer als die Anzahl der Gesamtpixel ist. Die ausgewerteten Pixel können gleichmäßig über den Bildsensor verteilt sein. Beispielsweise kann nur jeder n-Pixel mit 2 ≤ n ≤ 30 ausgewertet werden. Insbesondere kann nur jeder zweite Pixel ausgewertet werden. Die nur teilweise Auswertung des optischen Sensors kann insbesondere nur zeitweise erfolgen. Insbesondere kann die nur teilweise Auswertung des optischen Sensors im Ruhemodus erfolgen.

Ebenso kann durch die Wahl einer großen Zeitspanne Energie gespart werden. So ist es denkbar, dass im Ruhemodus die Zeitspanne t größer gewählt ist als im Arbeitsmodus. Das heißt, im Ruhemodus ist die Bildfrequenz geringer als im Arbeitsmodus.

Das von dem Lichtmodul emittierte Licht kann gepulst sein. Es ist denkbar, dass die Pulsfrequenz im Ruhemodus geringer ist als im Arbeitsmodus. Durch das gepulste Licht ist besonders wirkungsvoll eine Abstandsänderung im Detektionsbereich und/oder im Arbeitsbereich ermittelbar. Gleichzeitig kann hierdurch wesentlich Energie eingespart werden. Schritt b) umfasst auch das Erkennen eines Benutzers. Generell kann ein einmaliges Erkennen eines beliebigen Objektes im Detektionsbereich ausreichen, um einen Benutzer zu erkennen und das Signal zum Start der Authentifizierungsüberprüfung auszulösen. Um zu erreichen, dass das Signal zum Start der Authentifizierungsüberprüfung nur selten ausgelöst wird und somit elektrische Leistung eingespart wird, ist es möglich, besondere Anforderungen an die Erkennung eines Benutzers zum Detektionsbereich zu stellen.

So ist es denkbar, dass im Schritt b) ein Benutzer im Detektionsbereich nur erkannt wird, wenn sich ein Objekt über eine vorgegebene Dauer d im Detektionsbereich aufhält. Schon durch die Wahl der Zeitspanne t könnten unter Umständen Objekte, die sich eine geringere Zeit als die Zeitspanne t im Detektionsbereich aufhalten, nicht detektiert werden. Es kann jedoch auch sein, dass die Detektionsdauer d größer als die Zeitspanne t gewählt ist. Z. B. kann d mit 0,5 s ≤ d ≤ 10 s, bevorzugt, 1 s ≤ 1 d ≤ 5 s gewählt werden. Hierdurch können Objekte, die den Detektionsbereich nur kurz queren, nicht als Benutzer erkannt werden.

Somit wird auch effektiv keine Authentifizierungsüberprüfung gestartet. Energie kann somit eingespart werden.

Ferner kann es vorgesehen sein, dass im Schritt b) ein Benutzer im Detektionsbereich nur erkannt wird, wenn ein Objekt einer vorgegebenen Größe sich in dem Detektionsbereich aufhält. Hierbei muss beispielsweise die Anzahl der Pixel, die im optischen Sensor das Vorhandensein des Objektes belegen, eine vorgegebene Mindestzahl erreichen. Diese Mindestzahl und/oder die vorgegebene Größe kann in der Kontrolleinheit gespeichert sein. Die Größe kann beispielsweise der Größe eines erwachsenen Menschen entsprechen.

Weiterhin ist es denkbar, dass im Schritt b) ein Benutzer im Detektionsbereich nur erkannt wird, wenn das Objekt sich im Detektionsbereich bewegt. Hierzu können beispielsweise die Pixel, die das Licht abbilden, von mindestens zwei zeitlich hintereinander aufgenommenen Bildern, insbesondere Erkennungsbildern, verglichen werden. Zusätzlich oder alternativ kann beispielsweise ein Abstand des Objektes zum optischen Sensor bei mindestens zwei zeitlich hintereinander aufgenommenen Bildern, insbesondere Erkennungsbildern, gemessen werden. Werden unterschiedliche Abstände detektiert, so hat sich das Objekt im Detektionsbereich bewegt. Um einen Abstand des Objekts zum optischen Sensor feststellen zu können, kann beispielsweise ein Time of Flight-Messung durchgeführt werden. Hierbei werden z. B. ein oder mehrere Lichtpulse ausgesandt und die Zeit, die der Puls zum Objekt und von dort zum optischen Sensor benötigt, gemessen. Die Zeit ist hierbei direkt proportional zum Abstand des Objektes.

Vorteilhafterweise kann das Sensorsystem derart ausgebildet sein, dass der Detektionsbereich in mindestens zwei Zonen aufgeteilt ist, in eine Nahzone und in eine Fernzone, wobei die Nahzone in einem geringeren Abstand zum Sensorsystem liegt als die Fernzone, wobei vorteilhafterweise ein Erkennen des Benutzers gemäß Schritt b) erst dann erfolgt, wenn der Benutzer sich in der Nahzone befindet. Die Nahzone liegt in einem geringeren Abstand zum Sensorsystem als die Fernzone. Eine Grenze der Nahzone zur Fernzone kann in einem Abstand z zum Sensorsystem vorgesehen sein. Beispielsweise beträgt z 0,5 m bis 2 m. Vorteilhafterweise beträgt z ≈ 0,6 m. Es ist denkbar, dass ein Erkennen des Benutzers gemäß Schritt b) erst dann erfolgen kann, wenn der Benutzer sich in der Nahzone befindet. Insbesondere wird zumindest eine Anforderung an das Erkennen des Benutzers gemäß Schritt b) erst in der Nahzone überprüft. Insbesondere wird nur in der Nahzone überprüft, ob sich das Objekt dem optischen Sensor und/oder dem Kraftfahrzeug annähern. Es kann sein, dass in der Fernzone eine Anforderung an das Erkennen des Benutzers gemäß Schritt b) überprüft wird. Z. B. kann die Größe des Objektes in der Fernzone überprüft werden. Insbesondere kann es sich um eine andere Anforderung handeln als diejenige, die in der Nahzone überprüft wird. Bevorzugt wird eine Anforderung in der Fernzone gewählt, die weniger elektrische Leistung benötigt als die Anforderung in der Nahzone. Es kann sein, dass eine Messung des Abstandes des Objekts zum Sensorsystem nur in der Nahzone durchgeführt wird. Durch diese Aufteilung kann ebenfalls elektrische Leistung gespart werden. Es ist denkbar, dass sich das Sensorsystem in dem Ruhemodus befindet, wenn sich ein Objekt in der Fernzone aufhält und sich in dem Arbeitsmodus befindet, wenn sich ein Objekt in der Nahzone befindet.

Ebenfalls kann es vorteilhaft sein, die elektrische Energie pro Lichtquelle und/oder Lichtpuls zu senken. So können mehrere Lichtquellen in dem Lichtmodul vorhanden sein. Ebenfalls kann es sein, dass mehrere Lichtpulse nacheinander vom Lichtmodul emittiert werden, um ein Bild erzeugen zu können. Die Lichtpulse können aufintegriert oder aufsummiert werden, um das Bild zu erzeugen. Hierdurch kann die elektrische Leistung pro Lichtpuls herabgesenkt werden. Um in diesem Fall eine Abstandsmessung durchführen zu können, wird ein bestimmtes Zeitintervall für die Bildaufnahme vorgegeben. Die gesamte Intensität der erhaltenen Lichtpulse in dem Zeitintervall wird mit dem Abstand korreliert.

Vorteilhafterweise kann das Lichtmodul und/oder der Sensor ein Linsensystem aufweisen, wobei insbesondere das Linsensystem einen Filter aufweist und/oder das Sensorsystem ein starres Linsensystem aufweist. Besonders vorteilhaft ist, dass ein Linsensystem für den Detektionsbereich und für den Betätigungsbereich verwendet wird.

Zudem kann das erfindungsgemäße Emblem in einer Aufnahme angeordnet sein, die zur Montage des Emblems an dem Kraftfahrzeug ausgebildet ist, und/oder dass das Emblem eine Vielzahl an unabhängigen Feldern aufweist, wobei jeweils in einem Feld eins der folgenden Bauteile angeordnet ist: Lichtmodul, Anzeigeelement, optischer Sensor, Beleuchtungselement. Zudem ist es denkbar, dass das Emblem mit einer Abschirmung ausgebildet ist, damit keine unnötigen Störlichter die Funktionsweise des optischen Sensorsystems beeinflussen.

Vorteilhafterweise kann das Emblem oder die Aufnahme geeignet sein, am Kraftfahrzeugheck oder an einer Kraftfahrzeugseite befestigt zu werden, insbesondere kann das Emblem beweglich sein. Beispielsweise ist es denkbar, dass nach einer positiven Authentifizierungsüberprüfung das Emblem entsprechend bewegt wird, und zwar aus einer ersten Stellung in eine zweite Stellung, wobei in der zweiten Stellung der Betätigungsbereich über das Anzeigeelement oder über das Beleuchtungselement visualisiert wird.

Das Arbeitssignal kann ein Signal zum Öffnen und/oder Schließen eines beweglichen Teils des Kraftfahrzeugs sein. Alternativ oder zusätzlich kann das Arbeitssignal Entriegeln und/oder Verriegeln des beweglichen Teils sein. Zudem ist es denkbar, dass weitere Funktionen über das Arbeitssignal triggerbar sind, wie z. B.:
- Öffnen und/oder Schließen der Seitentür des Kraftfahrzeuges,
- Öffnen und/oder Schließen eines Fensters des Kraftfahrzeuges,
- Öffnen und/oder Schließen der Motorhaube des Kraftfahrzeuges,
- Öffnen und/oder Schließen des Tankdeckels des Kraftfahrzeuges,
- Einschalten und/oder Ausschalten einer Standheizung des Kraftfahrzeuges,
- Einschalten und/oder Ausschalten einer Scheibenheizung des Kraftfahrzeuges,
- Einschalten und/oder Ausschalten einer Lichtfunktion des Kraftfahrzeuges,
- Einklappen und/oder Ausklappen der Seitenspiegel des Kraftfahrzeuges,
- Einschalten und/oder Ausschalten einer Alarmanlage des Kraftfahrzeuges,
- Einstellen einer benutzerspezifischen Einstellung im Kraftfahrzeug, insbesondere der Sitzeinstellung des Fahrersitzes,
- Ein- und/oder Ausfahren einer Anhängerkupplung.

Es ist erfindungsgemäß vorgesehen, dass das optische Sensorsystem in dem Emblem ausgebildet ist. Insbesondere kann es vorgesehen sein, dass das optische Sensorsystem oder das gesamte Montagemodul zur Anordnung am Fahrzeugheck, z. B. in dem Emblem ausgebildet ist. Alternativ oder zusätzlich kann das Montagemodul geeignet sein, an einer Fahrzeugseite z. B. in einer B-Säule befestigt zu werden. Hierdurch können unterschiedliche Detektionsbereiche, in denen sich üblicher Weise ein Benutzer dem Kraftfahrzeug annähert, mit dem optischen Sensorsystem überwacht werden. Insbesondere kann das optische Sensorsystem oder das gesamte Montagemodul hinter einer von außen undurchsichtigen Schicht verdeckt sein, die jedoch für das Licht des optischen Sensorsystems lichtdurchlässig ist. So kann z. B. der Stoßfänger, an dem das optische Sensorsystem montiert ist, lackiert sein.

Bevorzugt ist das optische Sensorsystem derart am Kraftfahrzeug angeordnet, dass es wenig verschmutzt. Z. B. kann das optische Sensorsystem hinter der Heckscheibe im Wischbereich des Scheibenwischers oder an der Griffleiste angeordnet sein. Alternativ oder zusätzlich kann das Montagemodul eine Waschdüse aufweisen, mit der das optische Sensorsystem gesäubert werden kann. Die Waschdüse kann hierbei z. B. immer dann automatisch das optische Sensorsystem reinigen, wenn auch der Scheibenwischer der Front- und/oder Heckscheibe betätigt wird. Ein sauberes optisches Sensorsystem benötigt eine geringere Lichtintensität zum Funktionieren, so dass auch hierdurch Energie gespart werden kann.

Die Intensität des emittierten Lichts kann von der Helligkeit des Umgebungslichts abhängen. Die Helligkeit des Umgebungslichts kann durch einen Helligkeitssensor ermittelt werden.

Können bei der Überwachung des Betätigungsbereichs verschiedene Benutzerwillen festgestellt werden, so können verschiedenen Gesten verschiedene Benutzerwillen zugeordnet werden. So kann z. B. mit dem Fuß in den Betätigungsbereich treten ein Öffnen der Heckklappe verursachen, während eine seitliche Bewegung einer Hand nahe dem optischen Sensor ein Ausfahren der Anhängerkupplung bewirkt.

Es ist denkbar, dass ein Entfernen des Objekts innerhalb einer vorgegebenen Entfernungsdauer aus dem Betätigungsbereich erfolgen muss, damit das Signal bereitgestellt wird. Das Entfernen eines Objektes innerhalb einer vorgegebenen Entfernungsdauer kann Teil der Geste sein. Der Beginn der Entfernungsdauer ist für den Benutzer wahrnehmbar. So kann z. B. ein Anzeigeelement mehrere Beleuchtungszustände einnehmen. In einem der Beleuchtungszustände kann ein solches Anzeigeelement Licht einer konstanten Helligkeit emittieren. In einem anderen Beleuchtungszustand kann z. B. die Helligkeit sich periodisch ändern. So kann z. B. der Beginn der Betätigungsdauer das Anzeigeelement Licht konstanter Helligkeit emittieren. Während der Entfernungsdauer kann das Anzeigeelement z. B. blinken. Nur wenn das Objekt, insbesondere ein Körperteil des Benutzers, innerhalb der Entfernungsdauer aus dem Betätigungsbereich entfernt wird, wird das Signal bereitgestellt.

Es kann vorgesehen sein, dass das Montagemodul und/oder Kraftfahrzeug zumindest ein Mittel aufweist, das es dem Benutzer erleichtert, den Benutzerwillen im Betätigungsbereich kund zu tun, so dass das Signal ausgelöst wird.

So kann das Montagemodul ein Hinweissignal aussenden, dass die Betätigungsdauer in Kürze enden wird. Das Hinweissignal kann z. B. durch einen Wechsel des Beleuchtungszustands des Anzeigeelements beginnen. Das Hinweissignal kann einem anderen Beleuchtungszustand des Anzeigeelements entsprechen. Z. B. kann zum Ende der Betätigungsdauer das Anzeigeelement blinken. Das Mittel entspricht einer entsprechenden Verfahrensvorgabe in der Überwachungseinheit.

Ebenfalls kann es für den Benutzer zum Kundtun seines Benutzerwillens hilfreich sein, wenn der Benutzer zu dem Betätigungsbereich geleitet wird. Dieses ist insbesondere der Fall, wenn der Benutzer durch Tragen eines großen Gegenstandes die Endfläche des Betätigungsbereichs auf der Bodenfläche nicht wahrnehmen kann. Hierzu kann das Montagemodul und/oder das Kraftfahrzeug Mittel aufweisen, durch die für den Benutzer ein wahrnehmbares, insbesondere sehbares, hörbares oder fühlbares, Signal erzeugt werden kann. So kann beispielsweise das Montagemodul Leuchtelemente, z. B. LEDs, aufweisen. Die Leuchtelemente können so angeordnet sein, dass die Leuchtelemente als Wegweiser wirken. Beispielsweise können die Leuchtelemente derart ausgerichtet sein, dass sie Markierungen auf der Bodenfläche erzeugen, die zum Betätigungsbereich hinführen. Zusätzlich oder alternativ können die Leuchtelemente nebeneinander angeordnet sein. Die Leuchtelemente können in einer Reihenfolge angeschaltet werden, die dem Benutzer zeigt, in welche Richtung der Benutzer sich auf den Betätigungsbereich zubewegen muss. Anstelle der Leuchtelemente können hierfür auch vorhandene, nebeneinander im Kraftfahrzeug angeordnete Lichtelemente, z. B. die Leuchtelemente eines Scheinwerfers, einer Bremsleuchte, Blinker oder dergleichen, verwendet werden. Ebenfalls ist es denkbar, dem Benutzer akustisch hörbar eine Anleitung zu geben, in welche Richtung der Benutzer sich bewegen muss. Hierzu kann das Montagemodul einen Lautsprecher aufweisen. Ebenfalls ist es denkbar, die Richtungsänderung dem ID-Geber mitzuteilen, der durch verschiedene Vibrationen dem Benutzer den Weg weist. Wird dem Benutzer eine Richtungsänderung mitgeteilt, so ermittelt das optische Sensorsystem die Position des Benutzers und die Richtung, in die er sich zu dem Betätigungsbereich bewegen muss, und veranlasst das wahrnehmbare Mittel, das entsprechende Signal auszusenden.

Ebenfalls kann es für den Benutzer hilfreich sein, dass die Position des Betätigungsbereichs und/oder die Länge der Betätigungsdauer veränderbar ist. Dieses ist insbesondere hilfreich, wenn ein körperlich beeinträchtigter Benutzer seinen Benutzerwillen kund tun möchte. Ebenfalls ist dieses hilfreich, wenn der Betätigungsbereich an einer für den Benutzer ungünstigen Position angeordnet ist. Die ungünstige Position kann hierbei dauerhaft sein. Z. B. kann der Betätigungsbereich auf einer Anhängerkupplung enden. Alternativ kann die ungünstige Position nur für ein Auslösen eines einmaligen Arbeitssignals ungünstig sein, z. B. weil der Betätigungsbereich an einer Pfütze endet. Um die Position des Betätigungsbereichs und/oder die Länge der Betätigungsdauer zu ändern, kann insbesondere eine vordefinierte Benutzerhandlung vorgesehen sein. So kann z. B. der Benutzer die Position des Betätigungsbereichs und/oder Länge der Betätigungsdauer durch eine Eingabe in einem Benutzermenü, z. B. eines KFZ-Steuergeräts oder eines ID-Gebers, ändern. Alternativ kann die vordefinierte Benutzerhandlung vom optischen Sensorsystem erkannt werden. In einer weiteren Alternative kann das Montagemodul in einen Lernmodus überführt werden, in dem das Montagemodul die geänderte Position des Betätigungsbereichs und/oder die geänderte Länge des Betätigungsbereichs lernt.

Ebenfalls kann es für den Benutzer hilfreich sein, dass der Betätigungsbereich erneut überwacht ist, um einen Benutzerwillen zum Auslösen eines Arbeitssignals festzustellen, nachdem eine erste Betätigungsdauer ohne Erkennen eines Benutzerwillens beendet ist. Dieses ist insbesondere hilfreich, wenn der Benutzer abgelenkt war und den Betätigungsbereich nicht rechtzeitig erreicht hat oder die falsche Geste durchgeführt hat. Daher kann vorgesehen sein, dass der Betätigungsbereich mehrmals, insbesondere zwei- oder dreimal, hintereinander überwachbar ist. Das erneute Überwachen des Betätigungsbereichs kann automatisch eingeleitet werden. Alternativ kann eine vordefinierte Benutzerhandlung vorgesehen sein, um den Betätigungsbereich erneut für eine weitere Betätigungsdauer zu überwachen. Hierzu kann beispielsweise ein kapazitiver Sensor von dem Benutzer angesprochen werden. Alternativ kann es sich um eine vordefinierte Benutzerhandlung handeln, die vom optischen Sensorsystem erkannt wird.

Bei der vordefinierte Benutzerhandlung, die vom optischen Sensorsystem erkannt wird und die eine Änderung der Position des Betätigungsbereichs und/oder der Betätigungsdauer und/oder eine erneute Überwachung des Betätigungsbereichs zum Erkennen eines Benutzerwillens veranlasst, kann es sich beispielhaft um folgende Benutzerhandlungen handeln: eine vorgegebene Gestik innerhalb des Betätigungs- und/oder Detektionsbereichs, beispielsweise ein Hin- und Herbewegen eines Körperteils des Benutzers, ein Nicht-Entfernen des Körperteils, sofern ein Entfernen vorgesehen war, eine Bewegung des Benutzers in den Detektions- und/oder Betätigungsbereich und/oder aus dem Detektions- und/oder Betätigungsbereich. Insbesondere kann der Körperteil eine Hand oder ein Fuß sein. Weiter kann vorgesehen sein, dass der Benutzer den Detektionsbereich für eine vorgegebene Zeit verlässt und sich dann wieder in den Detektionsbereich begibt.

Wird der Betätigungsbereich erneut zum Feststellen eines Benutzerwillens überwacht, so zeigt auch das Anzeigeelement dieses an. Wird die Position des Betätigungsbereichs verändert, so zeigt das Anzeigeelement dieses an. Hierzu kann das Anzeigeelement mehrere Leuchtmittel, z. B. LEDs, auf. Jeweils ein oder mehrere Leuchtmittel machen jeweils einen Betätigungsbereich zumindest teilweise sichtbar. Vorzugsweise liegt der Betätigungsbereich mit der geänderten Position innerhalb des Detektionsbereichs. Je nachdem welcher Betätigungsbereich überwacht wird, werden die entsprechenden Pixel ausgewertet.

Es kann sein, dass eine Position des ID-Gebers während oder nach einer Authentifizierung und vor Auslösen des Signals überprüft wird. Hierzu kann die Stärke eines von einem ID-Geber ausgesendeten Signals verwendet werden. Beispielsweise kann der Receive Signal Strength Indicator (RSSI) hierzu verwendet werden. Durch die Ermittlung der Stärke des ausgesendeten Signals kann z. B. festgestellt werden, ob sich der Benutzer vor, neben oder hinter dem Kraftfahrzeug befindet. Hierdurch kann sichergestellt werden, dass nur der berechtigte Benutzer selber in den Detektionsbereich gelangt ist und seinen Benutzerwillen im Betätigungsbereich kundgetan hat. Es ist denkbar, den RSSI zyklisch abzufragen.

Ebenfalls kann durch Licht verschiedener Wellenlängen Energie gespart werden. So kann die Überwachung des Detektionsbereichs bis zum einmaligen Erkennen eines beliebigen Objekts im Detektionsbereich mit Licht einer längeren Wellenlänge erfolgen als das anschließende Überprüfen weiterer Anforderungen, die an das Erkennen eines Benutzers gestellt sind. So kann zunächst z. B. Licht einer Wellenlänge von 905 nm verwendet werden. Wird ein Objekt im Detektionsbereich festgestellt, so kann z. B. Licht einer Wellenlänge von 800 nm verwendet werden. Alternativ kann sich die Wellenlänge verkürzen, wenn das Objekt von der Fern- in die Nahzone wechselt.

Die Aufgabe der Erfindung wird auch durch ein Verfahren zur Auslösung eines Arbeitssignals für ein Kraftfahrzeug mit einem Emblem, das ein Sensorsystem aufweist, gelöst, wobei das Sensorsystem folgende Schritte durchführt:
a) Überwachen eines außerhalb des Fahrzeugs liegenden Detektionsbereichs,
b) im Falle eines Erkennens eines Benutzers im Detektionsbereich Auslösen eines Signal für den Start einer Authentifizierungsüberprüfung zwischen einem ID-Geber und dem Kraftfahrzeug,
c) Überwachen eines außerhalb des Fahrzeuges liegenden, sich vom Detektionsbereich unterscheidenden Betätigungsbereichs,
d) Im Falle eines Erkennens eines Benutzers im Betätigungsbereich Bereitstellen des Arbeitssignals für das Fahrzeug.

Bevorzugt handelt es sich bei dem erfindungsgemäßen Verfahren um ein Verfahren, das mit dem Emblem, wie es zuvor beschrieben ist, ausführbar ist. Insbesondere kann es sich bei der Authentifizierung um eine Passive-Keyless-Entry-Überprüfung handeln. Im Folgenden sollen einige erfindungswesentliche Punkte erneut dargestellt werden, wobei für genauere Ausführungen auf die Beschreibung zum erfindungsgemäßen Emblem verwiesen wird, die ebenfalls für das erfindungsgemäße Verfahren gelten.

Vorteilhafterweise wird nach einer positiven Authentifizierung gemäß b) ein am Sensorsystem angeordnetes Beleuchtungselement in einem ersten Beleuchtungszustand betrieben. Zudem ist es denkbar, dass gemäß c) das Beleuchtungselement in einem zweiten Beleuchtungszustand betrieben wird, der sich vom ersten Beleuchtungszustand unterscheidet. Ebenfalls kann die Erfindung vorsehen, dass gemäß Schritt d) das Beleuchtungselement in einem dritten Beleuchtungszustand betrieben wird, der sich vom ersten und/oder vom zweiten Beleuchtungszustand unterscheidet, wobei insbesondere ein Öffnungsvorgang eines beweglichen Teils des Kraftfahrzeuges ausgeführt wird. Die unterschiedlichen Beleuchtungszustände bieten dem Benutzer ein Informationsgehalt, um entsprechend einen Benutzerwillen zur Bereitstellung des Arbeitssignals für das Kraftfahrzeug auszuführen.

Erfindungsgemäß ist der Detektionsbereich in mindestens zwei Zonen aufgeteilt, in eine Nahzone und eine Fernzone, wobei die Nahzone in einem geringeren Abstand zum Sensorsystem liegt als die Fernzone, wobei ein Erkennen des Benutzers gemäß Schritt b) erst dann erfolgt, wenn der Benutzer sich in der Nahzone befindet, insbesondere der Detektionsbereich dauerhaft überwacht wird und/oder Schritt b) erfolgt, wenn der Benutzer sich in der Nahzone befindet. Das bedeutet, dass der Detektionsbereich dauerhaft beim abgestellten Kraftfahrzeug bis zu einer erfolgreichen Authentifizierung überwacht wird. Hierbei kann während dieser Überwachung nach jeder vorgegebenen Zeitspanne t das Sensorsystem ausgewertet werden.

Das erfindungsgemäße Verfahren kann vorsehen, dass das Erkennen des Benutzers gemäß Schritt c) oder d) eine definierte Gestik und/oder Handlung des Benutzers erfordert. Zudem kann das erfindungsgemäße Verfahren vorteilhafterweise vorsehen, dass das Bereitstellen des Arbeitssignals gemäß Schritt d) nur dann erfolgt, wenn der das Beleuchtungselement im ersten oder im zweiten Beleuchtungszustand betrieben wird, insbesondere dass der erste und/oder der zweite Beleuchtungszustand nur in einer definierten Zeit während des Schrittes c) betrieben wird.

In einer möglichen Ausgestaltung des erfindungsgemäßen Verfahrens kann Schritt c) innerhalb eines definierten Zeitfensters erfolgen, insbesondere wenn keine Gestik und/oder Handlung des Benutzers innerhalb des definierten Zeitfensters erfolgt ist, der Schritt d) nicht ausgeführt wird. Erfindungsgemäß sendet das Sensorsystem Licht im für den Benutzer nicht sichtbaren Bereich aus, insbesondere sendet das Sensorsystem gepulstes Licht aus. Weiterhin kann das erfindungsgemäße Verfahren ein Anzeigeelement vorsehen, das für den Schritt c) Licht im sichtbaren Bereich aussendet, um einen Betätigungsbereich für den Benutzer zu schaffen, insbesondere dass der Betätigungsbereich im Detektionsbereich liegt. Zudem kann das Sensorsystem einen Sensor aufweisen, der Licht aus dem Detektionsbereich und/oder Betätigungsbereich empfängt, wobei das Sensorsystem eine Überwachungseinheit aufweist, die Daten des Sensors auswertet.

In einer die Erfindung verbessernden Maßnahme kann das Sensorsystem das Lichtmodul aufweisen, das Licht emittiert, sodass ein Sendebereich entsteht, wobei der Sensor einen Empfangsbereich aufweist, der sich mit dem Sendebereich zumindest teilweise überschneidet, wobei der Bereich der Überschneidung den Detektionsbereich bildet. Es kann sein, dass das Sensorsystem einen Ruhemodus und einen Arbeitsmodus schalten kann. Im Ruhemodus kann die Bildfrequenz niedriger sein als im Arbeitsmodus. Das von dem Lichtmodul emittierte Licht kann gepulst sein. Es ist denkbar, dass die Pulsfrequenz im Ruhemodus geringer ist als im Arbeitsmodus. Ebenfalls kann es sein, dass mehrere Lichtpulse vom Lichtmodul nacheinander emittiert werden, um ein Bild erzeugen zu können. Die Lichtpulse werden aufintegriert und/oder aufsummiert, um das Bild zu erzeugen.

Ebenfalls kann die Kontrolleinheit im Schritt a) und Schritt c) während der Überwachung des Detektionsbereiches und/oder des Betätigungsbereiches nur einen Teil des vom optischen Sensor aufgenommenen Bildes auswerten. Hierdurch kann Energie eingespart werden.

Um genauer entscheiden zu können, dass sich ein Benutzer dem Kraftfahrzeug nähert, kann es vorteilhaft sein, dass das Sensorsystem eine Überprüfung einer Abstandsänderung durchführt, um im Detektionsbereich und/oder im Betätigungsbereich einen Benutzer zu erkennen, der sich dem Kraftfahrzeug nähert, insbesondere dass das Sensorsystem erst dann eine Überprüfung einer Abstandsänderung durchführt, wenn der Benutzer sich in der Nahzone befindet. Somit kann wirkungsvoll verhindert werden, dass beispielsweise eine Authentifizierungsüberprüfung nicht gestartet wird, wenn lediglich der Benutzer an seinem Kraftfahrzeug vorbeigeht und nicht die Absicht hat, eine etwaige Funktion am Kraftfahrzeug auszulösen.

Vorteilhafterweise kann das Sensorsystem Bilder des Detektionsbereiches und/oder des Betätigungsbereiches empfangen und/oder aufnehmen, wobei die Bilder gepulste Bilder und ungepulste Bilder sind, wobei die gepulsten Bilder durch die Reflexion des emittierten, gepulsten Lichts des Sensorsystems entstehen und die ungepulsten Bilder durch das Licht des Detektionsbereiches und/oder Betätigungsbereiches entstehen, und dass insbesondere für die Überprüfung einer Abstandsänderung die gepulsten Bilder mit den ungepulsten Bildern verglichen werden können. Hierdurch lässt sich effizient und mit einem geringen Energieaufwand eine Abstandsänderung des Benutzers erkennen. Das bedeutet, dass das Sensorsystem so eingestellt ist, dass nur definierte Bewegungen des Benutzers im Detektionsbereich und/oder im Betätigungsbereich letztendlich eine Auslösung des Arbeitssignals bzw. einen Start der Authentifizierungsüberprüfung auslösen.

Das erfindungsgemäße Verfahren kann dadurch u. a. energiearm betrieben werden, dass das Sensorsystem im Ruhemodus solange geschaltet ist, bis der Benutzer in die Nahzone gelangt, insbesondere dass die Pulsfrequenz des emittierten Lichtes im Ruhemodus geringer ist als im Arbeitsmodus.

Erfindungsgemäß sendet während des Schritts b) der ID-Geber einen Authentifizierungscode an ein Zugangskontrollsystem des Kraftfahrzeuges und das Zugangskontrollsystem vergleicht den Authentifizierungscode mit einem gespeicherten Code und im Falle einer Übereinstimmung wird ein Entriegelungssignal ausgelöst. Des Weiteren kann die Erfindung vorsehen, dass Schritt d) nur im Falle einer definierten Bewegung des Benutzers oder eines Körperteils des Benutzers im/am Betätigungsbereich erfolgt, insbesondere dass das Körperteil ein Fuß oder eine Hand des Benutzers ist. Es erfolgt die Bereitstellung des Arbeitssignals für das Fahrzeug, was z. B. ein automatisches Öffnen der Heckklappe sein kann.

Zum einen kann der Betätigungsbereich nahezu auf dem Boden oder auf der Bodenfläche sich befinden, wobei der Benutzer den Betätigungsbereich mit einem entsprechenden Handlungswillen ansprechen muss, um eine entsprechende Funktion im Kraftfahrzeug auszulösen. Ebenfalls ist es denkbar, dass der Betätigungsbereich in einem Abstand zum Boden und zum Sensorsystem sich befindet, wobei insbesondere der Betätigungsbereich ungefähr auf gleicher Hohe zum Sensorsystem sich befinden kann. Beispielsweise kann der Betätigungsbereich am Emblem in einem geringen Abstand zum Kraftfahrzeug positioniert sein. Der Betätigungsbereich kann z. B. durch das Beleuchtungselement gebildet sein. Beispielsweise ist es denkbar, dass der Benutzer das Emblem berühren muss, um im Betätigungsbereich erkannt zu werden, um das Arbeitssignal für das Kraftfahrzeug zu triggern.

Das Lichtmodul kann zusätzlich als Kfz-Nummernschildbeleuchtung zum Einsatz kommen. Das Lichtmodul ist in seiner Position am Kraftfahrzeug variabel, wobei es beispielsweise auch am Stoßfänger oder in der Nähe des Kfz-Nummernschildes angeordnet sein kann.

Das Lichtmodul kann beispielsweise mindestens ein LED-Element sein. Alternativ und/oder zusätzlich können sich die Beleuchtungszustände u. a. dadurch unterscheiden, dass diese unterschiedlich lang blinken können, beispielsweise dass im ersten Beleuchtungszustand das Beleuchtungselement dauerhaft Licht emittiert, im zweiten Beleuchtungszustand das Beleuchtungselement blinkt und im dritten Beleuchtungszustand ein längeres Blinken des Beleuchtungselementes erfolgt, das bedeutet, die jeweilige Einschaltzeit des Beleuchtungselementes im dritten Beleuchtungszustand ist größer als die im zweiten Beleuchtungszustand. Natürlich umfasst die Erfindung auch weitere Variationen der Beleuchtungszustände, die sich in der jeweiligen Einschaltzeitdauer, der Wellenlänge des Lichtes, etc. unterscheiden können.

Ebenfalls ist es denkbar, dass der Betätigungsbereich, der beispielsweise durch das Lichtmodul auf die Bodenfläche projiziert wird, in unterschiedliche Beleuchtungszustände, wie beispielsweise in den ersten und/oder zweiten und/oder den dritten Beleuchtungszustand, bringbar ist.

Vorteilhafterweise weist das Emblem eine von der Kraftfahrzeugseite lichtdurchlässige Materialeigenschaft auf, sodass zuverlässig eine Überwachung des Detektionsbereiches und/oder des Betätigungsbereiches ausführbar ist. Von außen her kann jedoch der Betrachter nicht durch das Emblem schauen, da das Material an der Außenseite entsprechend ausgebildet ist.

Erfindungsgemäß erfolgt vorteilhafterweise die Aussendung von nicht sichtbarem Licht durch das Lichtmodul, wodurch der Detektionsbereich entsteht, wobei auch beim Überwachen des Betätigungsbereiches der Detektionsbereich über das Lichtmodul aufgebaut wird. Vorteilhafterweise ist die Intensität zur Emittierung des Lichtes durch das Lichtmodul immer dieselbe, insbesondere im Verfahrensschritt b) und im Verfahrensschritt d). Des Weiteren erzeugt das Lichtmodul vorteilhafterweise immer dieselben gepulsten Lichtsignale, wie bereits geschrieben. Die Kontrolleinheit wird vorteilhafterweise immer mit dem gleichen, starren Linsensystem betrieben, das heißt, es wird sowohl bei der Überprüfung des Detektionsbereiches als auch des Betätigungsbereiches der gleiche Detektionsbereich ausgewertet. Vorteilhafterweise wird jedoch im Bereich des Betätigungsbereiches ein geringerer Pixelbereich ausgewertet. Hierdurch kann Energie eingespart werden.

Besonders vorteilhaft ist, dass ein fester Detektionsbereich vom Sensorsystem überwacht wird. Zusätzlich gibt es einen Betätigungsbereich in dem Detektionsbereich, der dazu dient, zumindest eine Funktion am Kraftfahrzeug auszulösen. Da das erfindungsgemäße Verfahren bzw. die erfindungsgemäße Vorrichtung sehr energieschonend arbeitet, lässt sich der Detektionsbereich permanent überwachen. Bei dem Betätigungsbereich auf dem Boden bzw. auf der Bodenfläche kann es erfindungsgemäß erforderlich sein, dass der Fuß nur für eine kurze Zeitdauer am Betätigungsbereich zu betätigen ist, um eine Funktion auszulösen. Auch ist es denkbar, dass z. B. mehrere Betätigungsfelder im Heckklappenbereich angeordnet sind, auf die der Benutzer zumindest kurzfristig beide Füße stellen muss, um weitere Funktionen auszulösen.

Das Lichtmodul kann z. B. Laserlicht pulsen oder blitzen, um den Detektionsbereich entstehen zu lassen, wodurch auch der Betätigungsbereich zu überwachen ist. Über die Pulsung lässt sich eine genaue Abstandsmessung eines Objekts innerhalb des Detektionsbereiches und/oder des Betätigungsbereiches erzielen.

Alternativ und/oder zusätzlich kann beispielsweise eine Schutzabfrage integriert sein, die den Schritt a) mindestens für eine bestimmte Zeit unterbricht und/oder sperrt, wenn eine bestimmte Anzahl an ersten Handlungen erkannt wurde, die nicht der definierten Handlung entspricht, um Schritt c) durchzuführen.

Weitere die Erfindung verbessernde Maßnahmen ergeben sich aus der nachfolgenden Beschreibung zu den Ausführungsbeispielen der Erfindung, welche in den Figuren schematisch dargestellt sind. Es zeigen:
- Fig. 1: eine schematische Ansicht eines Montagemoduls für ein Kraftfahrzeug mit einem Sensorsystem, das einen Detektionsbereich und einen Betätigungsbereich überwacht,
- Fig. 2: eine schematische Draufsicht auf ein Kraftfahrzeug, das mit einem Sensorsystem gemäß Figur 1 ausgestattet ist,
- Fig. 3: eine schematische Draufsicht auf ein Kraftfahrzeug mit einem Sensorsystem gemäß Figur 1,
- Fig. 4: eine schematische Darstellung bezüglich eines Lichtmoduls eines Sensorsystems,
- Fig. 5: eine Draufsicht auf ein Kraftfahrzeug, das ein Montagemodul mit einem Sensorsystem aufweist,
- Fig. 6: eine Seitenansicht des Kraftfahrzeuges gemäß Figur 5,
- Fig. 7: eine weitere Ansicht auf ein Kraftfahrzeug mit einem Montagemodul gemäß Figur 1,
- Fig. 8: ein weiteres Ausführungsbeispiel eines Montagemoduls mit einem Sensorsystem zur Überwachung eines Detektionsbereiches und eines Betätigungsbereiches,
- Fig. 9: ein Ausführungsbeispiel eines Kraftfahrzeugemblems, in dem ein Sensorsystem zur Überwachung eines Detektionsbereiches und eines Betätigungsbereiches integriert ist,
- Fig. 10: eine Darstellung der Strahlungsintensität über die Zeit, die von einem Sensorsystem zur Überwachung des Detektionsbereiches und/oder des Betätigungsbereiches emittiert wird,
- Fig. 11: eine schematische Ansicht auf einen optischen Sensor des Sensorsystems,
- Fig. 12: eine Darstellung auf den optischen Sensor gemäß Figur 11, der in einem Auswertemodus betrieben wird,
- Fig. 13: der optische Sensor gemäß Figur 12, der in einem zweiten Auswertemodus betrieben wird,
- Fig. 14: ein möglicher Verfahrensablauf, der ein Montagemodul bezüglich Figur 1 bis Figur 13 betreiben kann,
- Fig. 15: eine schematische Darstellung des Sensorsystems, welches eine Überprüfung einer Abstandsänderung durchführt,
- Fig. 16: eine schematische Ansicht eines Montagemoduls, insbesondere eines Emblems mit einem optischen Sensorsystem,
- Fig. 17: das Montagemodul gemäß Figur 16 in einer weiteren Ansicht,
- Fig. 18: ein weiterer Verfahrensablauf gemäß einem weiteren Ausführungsbeispiel, der ein Montagemodul z. B. gemäß Figur 16 betreiben kann,
- Fig. 19: eine weitere Verfahrensvariante bezüglich Figur 18.

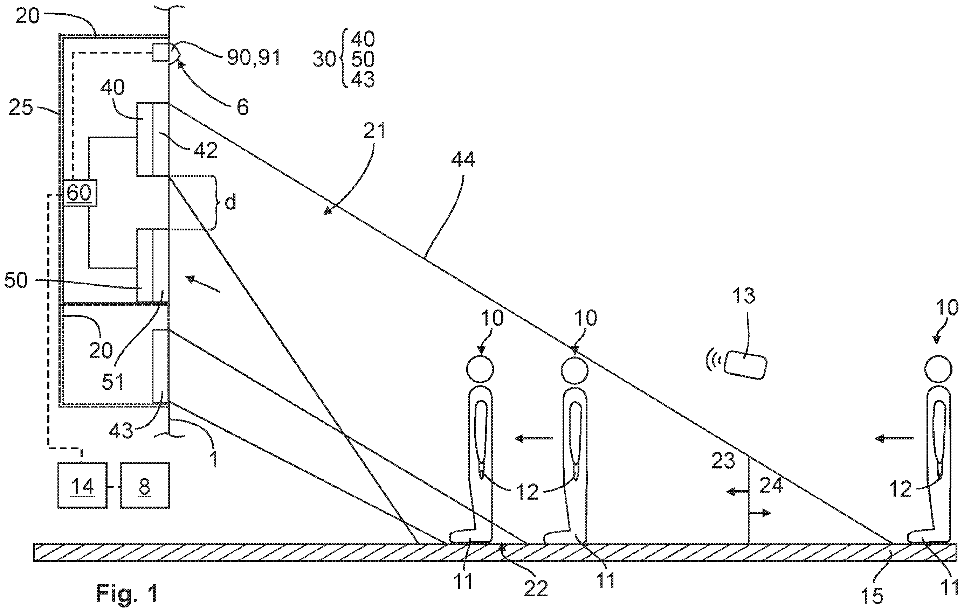

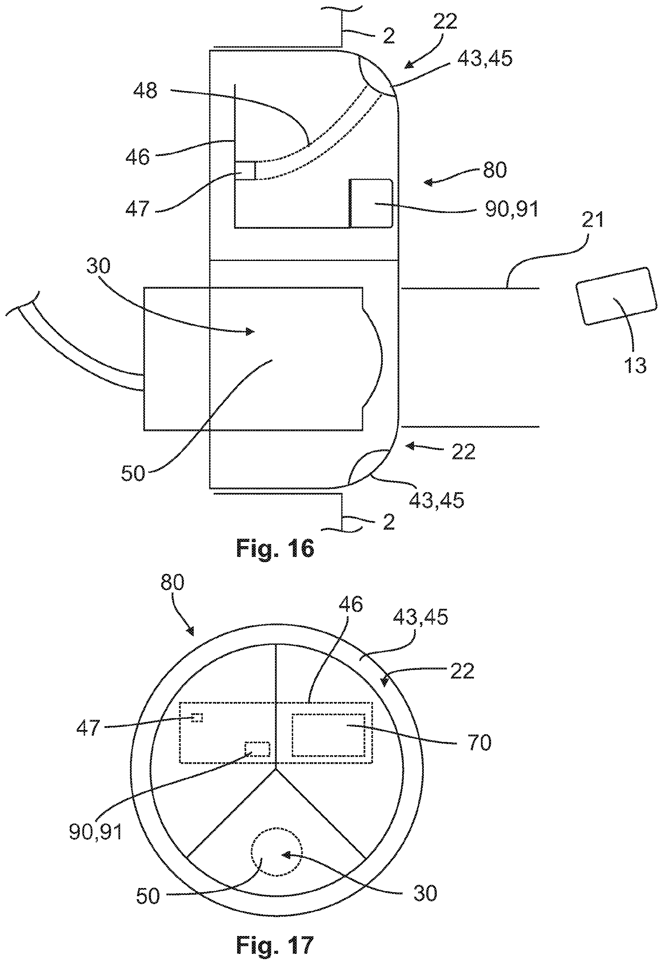

Figur 1, 16 zeigen ein Montagemodul 20, das in ein Kraftfahrzeug 1 einsetzbar ist. Das Montagemodul 20 weist ein Sensorsystem 30 auf, welches geeignet ist, das nahe Umfeld des Kraftfahrzeuges 1 zu überwachen. Das Montagemodul 20 ist mit einer Kraftfahrzeugelektronik, die im Kraftfahrzeug 1 integriert ist, elektronisch verbunden, wobei über eine Erkennung eines Benutzers 10 ein Arbeitssignal für das Kraftfahrzeug 1 erzeugbar ist, um beispielsweise ein Entriegeln und/oder ein Verriegeln und/oder Öffnen und/oder Verschließen eines beweglichen Teils 2, 3 des Kraftfahrzeuges 1 auszulösen. Das bewegliche Teil 2, 3 kann z. B. eine Heckklappe 2 oder eine Seitentür 3 bzw. eine Schiebetür 3 sein. Es handelt sich um ein optisches Sensorsystem 30.

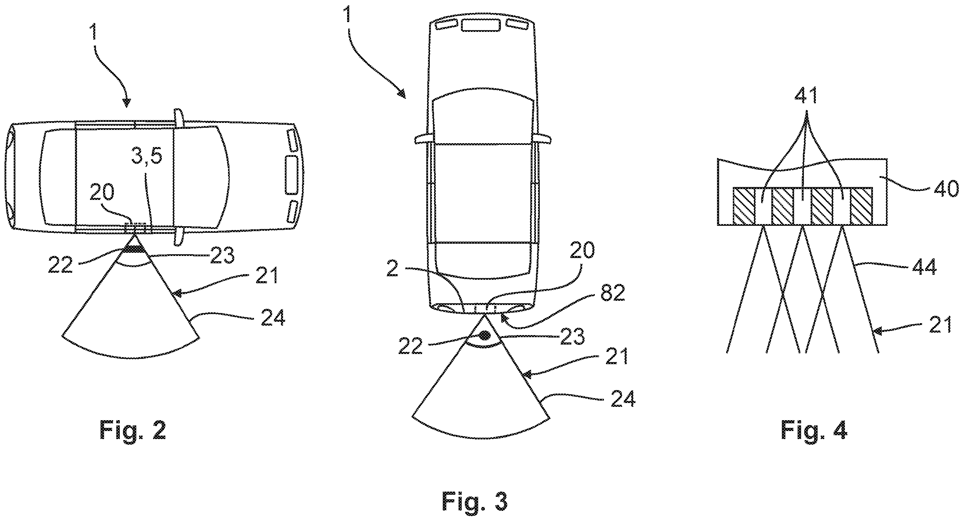

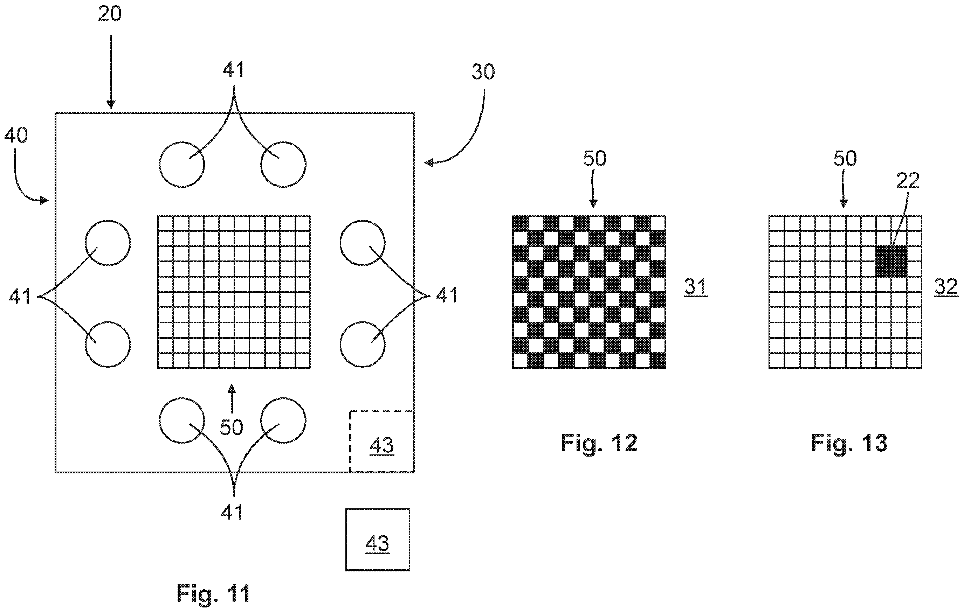

Das optische Sensorsystem 30 weist einen optischen Sensor 50 und ein Lichtmodul 40 auf, wobei das Lichtmodul 40 Licht 44 emittieren kann, wodurch ein Detektionsbereich 21 entsteht. Zudem umfasst das Montagemodul 20 ein Anzeigeelement 43, das einen Betätigungsbereich 22 entstehen lassen kann. Zudem weist das Lichtmodul 40 eine Vielzahl an Lichtquellen 41 auf, welches in Figur 4 und Figur 11 schematisch gezeigt ist. Das Lichtmodul 40 weist zudem einen Abstand zum optischen Sensor 50 auf, der im vorliegenden Ausführungsbeispiel in einem Bereich d liegen kann, der zwischen 1 cm ≤ d ≤ 3 cm liegt. Der optische Sensor 50 ist derart ausgebildet, dass Licht 44 aus dem Detektionsbereich 21 und/oder aus dem Betätigungsbereich 22 empfangen wird. In den dargestellten Ausführungsbeispielen ist der Detektionsbereich 21 für den Benutzer 10 nicht sichtbar, wobei das Lichtmodul 40 derart ausgebildet ist, dass das emittierte Licht 44 IR-Strahlen sind.

Das Lichtmodul 40 gemäß Figur 1 kann ein Linsensystem 42 aufweisen, das beispielsweise zusätzlich mit einem Filter, der explizit nicht dargestellt ist, ausgeführt sein kann. Zudem ist in Figur 1 eine Kontrolleinheit 60 dargestellt, die geeignet ist, Daten des Sensors 50 auszuwerten. Zudem kann die Kontrolleinheit 60 weitere Funktionen übernehmen, worauf im Folgenden noch einzugehen ist. Vorteilhafterweise ist die Kontrolleinheit 60 innerhalb des Montagemoduls 20 integriert. Ebenfalls kann es denkbar sein, dass die Kontrolleinheit 60 kraftfahrzeugseitig angeordnet ist, wobei eine elektronische Verbindung zwischen Kontrolleinheit und Montagemodul 20 bzw. dem optischen Sensorsystem 30 besteht.

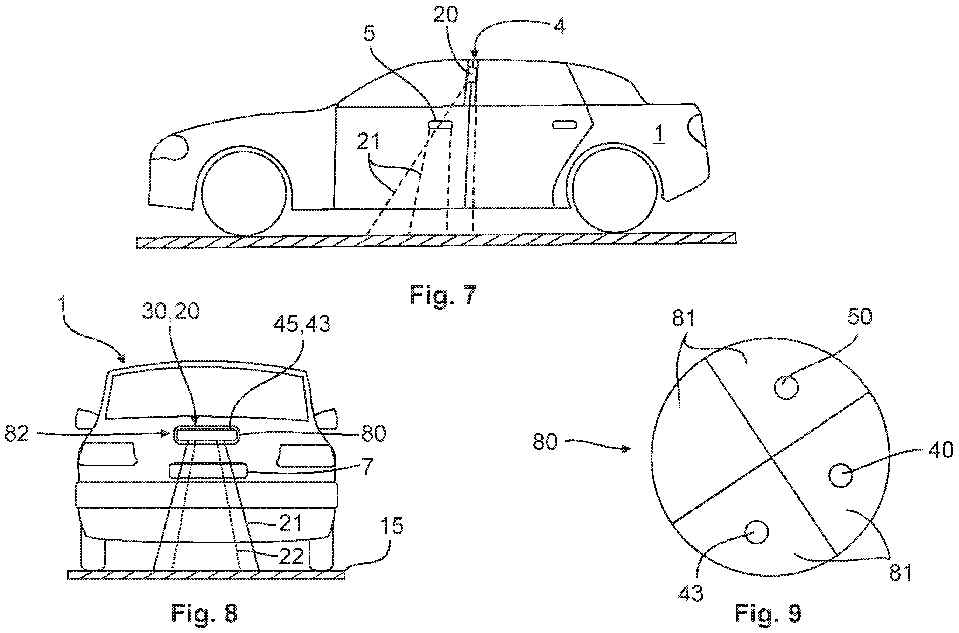

Das Montagemodul 20 gemäß sämtlicher Ausführungsbeispiele ist in einer Aufnahme 25 angeordnet, die zur Montage des Montagemoduls 20 an dem Kraftfahrzeug 1 ausgebildet ist. Das Montagemodul 20 und/oder die Aufnahme 25 sind gemäß aller Ausführungsbeispiele geeignet, am Kraftfahrzeugheck (Figur 3, Figur 5, Figur 6, Figur 8 und Figur 16) oder an einer Fahrzeugseite (Figur 2 und Figur 7) angeordnet zu werden. Beispielsweise kann das Montagemodul 20 an der B-Säule 4 des Kraftfahrzeuges 1 (s. Figur 7) befestigt werden. Ebenfalls umfasst die Erfindung, dass das erfindungsgemäße Montagemodul 20 zumindest teilweise im Türgriff 5, wie in Figur 7 schematisch gezeigt ist, integriert ist.

Figur 1 zeigt, dass das Montagemodul 20 an einer Griffleiste 6 des Kraftfahrzeuges 1 vorgesehen ist, wobei die Griffleiste beispielsweise Bestandteil eines Türgriffes oder eines Heckgriffes sein kann. Der optische Sensor 50 kann zudem mit einem Linsensystem 51 ausgestattet sein, welches in Figur 1 gezeigt ist. In Figur 8 und Figur 9 ist das Ausführungsbeispiel gezeigt, bei dem das Montagemodul 20 in einem Emblem 80 des Kraftfahrzeuges 1 vorgesehen ist. Das Lichtmodul 40 sowie das Anzeigeelement 43 sind derart ausgerichtet, dass der Betätigungsbereich 22 wesentlich kleiner ist als der Detektionsbereich 21.

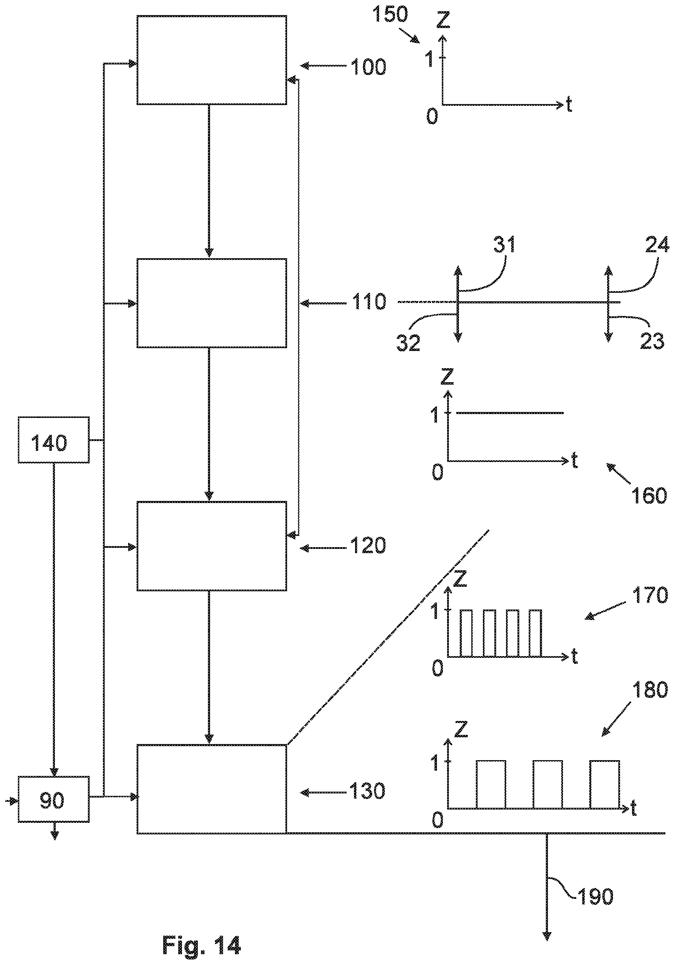

In Figur 8, Figur 9 und Figur 16 weist zudem das optische Sensorsystem 30 ein Beleuchtungselement 45 auf, um unterschiedliche Beleuchtungszustände für den Benutzer 10 sichtbar zu machen, die exemplarisch in Figur 14 gezeigt sind. Das Beleuchtungselement 45 kann auch als Anzeigeelement 43 arbeiten, worauf im Folgenden noch eingegangen wird. Gemäß Figur 9 und Figur 17 weist das Emblem 80 unterschiedliche Felder 81 auf, wobei jeweils in einem Feld 81 eines der folgenden Bauteile angeordnet sein kann: Lichtmodul 40, Anzeigeelement 43, optischer Sensor 50. Ebenfalls kann vorgesehen sein, dass in einem der Felder 81 das Beleuchtungselement 45 integriert sein kann. Zudem ist es im Rahmen der Erfindung denkbar, dass das Emblem 80 beweglich am Kraftfahrzeug 1 angeordnet ist. In einer ersten Lage könnte z. B. das optische Sensorsystem 30 geschützt hinter dem Emblem 80 sich befinden. In einer zweiten Lage ist es denkbar, dass eine Überprüfung des Detektionsbereiches 21 und/oder des Betätigungsbereiches 22 ausführbar ist.

Gemäß Figur 1 ist es denkbar, dass das Anzeigeelement 43 kraftfahrzeugseitig und nicht im Montagemodul 20 angeordnet ist. Das Anzeigeelement 43 steht in elektrischer Verbindung mit der Kontrolleinheit 60. Des Weiteren ist es gemäß Figur 1 und Figur 16 denkbar, eine Notbetätigung 90 innerhalb des Montagemoduls 20 vorzusehen, wobei über eine Aktivierung der Notbetätigung 90 mit einem Körperteil 12 des Benutzers 10 ein Arbeitssignal für das Fahrzeug 1 bereitgestellt werden kann. Diese Notbetätigung 90 ermöglicht es dem Benutzer 10, das genannte Arbeitssignal für das Kraftfahrzeug 1 auszulösen, wenn etwaig das optische Sensorsystem 30 verschmutzt oder etwaig in der Funktionsweise gestört ist. Die Notbetätigung 90 kann in einem derartigen Fall vom Benutzer 10 aktiviert werden, um das Arbeitssignal für das Kraftfahrzeug 1 auszulösen. Hierbei weist die Notbetätigung 90 ein Aktivierungsmittel 91 auf, das z. B. ein Taster oder ein Schalter sein kann, wobei das Aktivierungsmittel 91 kapazitiv oder induktiv oder berührungslos funktionieren kann. Ebenfalls kann das Aktivierungsmittel ein Piezoelement sein. Falls das Sensorsystem 30 eine höhere Verschmutzung aufweist, sodass das optische Sensorsystem 30 nicht ausreichend den Detektionsbereich 21 und/oder Betätigungsbereich 22 überwachen kann, ist das Sensorsystem 30 in der Lage, mit einer erhöhten Leistung betrieben zu werden, wodurch eine zufriedenstellende Überwachung des Detektionsbereiches 21 und/oder des Betätigungsbereiches 22 möglich ist.

Das optische Sensorsystem 30 kann gemäß Figur 1 den außerhalb des Kraftfahrzeugs 1 liegenden Bereich überwachen, insbesondere einen Detektionsbereich 21 überwachen, wobei der Detektionsbereich in eine Nahzone 23 und eine Fernzone 24 aufgeteilt ist. Die Nahzone 23 weist einen geringeren Abstand zum Sensorsystem 30 auf als die Fernzone 24. Das erfindungsgemäße Sensorsystem 30 bewacht dauerhaft den Detektionsbereich 21, und zwar auch dann, wenn der Benutzer 10 sich außerhalb des Detektionsbereichs 21 befindet. Die Überwachung des Detektionsbereiches 21 ist schematisch auch in Figur 14 mit dem Bezugszeichen 100 dargestellt. Gelangt nun der Benutzer 10 innerhalb des Detektionsbereichs 21 in die Nahzone 23, erfolgt ein Signal für den Start einer Authentifizierungsüberprüfung zwischen einem ID-Geber 13, den der Benutzer bei sich trägt, und dem Kraftfahrzeug 1, welches mit dem Bezugszeichen 110 gemäß Figur 14 schematisch gezeigt ist. Liegt eine positive Authentifizierung vor, das bedeutet, dass der Benutzer 10 mit seinem ID-Geber 13 berechtigt ist, ein Arbeitssignal für das Kraftfahrzeug 1 bereitzustellen, erfolgt der Verfahrensschritt 120 gemäß Figur 14, bei dem ein außerhalb des Kraftfahrzeuges 1 liegender, sich vom Detektionsbereich 21 unterscheidender Betätigungsbereich 22 überwacht wird. Gemäß sämtlicher Ausführungsbeispiele sendet das Sensorsystem 30 Licht im für den Benutzer nicht sichtbaren Bereich aus, wodurch der Detektionsbereich 21 entsteht. Vorteilhafterweise sendet das Sensorsystem 30, insbesondere das Lichtmodul 40, gepulstes Licht aus. Der Benutzer 10 kann nun den Betätigungsbereich 22 über eine definierte Bewegung, Gestik, etc. aktivieren, welches durch das Sensorsystem 30 erkannt wird. Im Falle eines Erkennens des Benutzers 10 im Betätigungsbereich 22, erfolgt eine Bereitstellung des Arbeitssignals für das Kraftfahrzeug 1, welches im Verfahrensschritt 130 gemäß Figur 14 gezeigt ist.

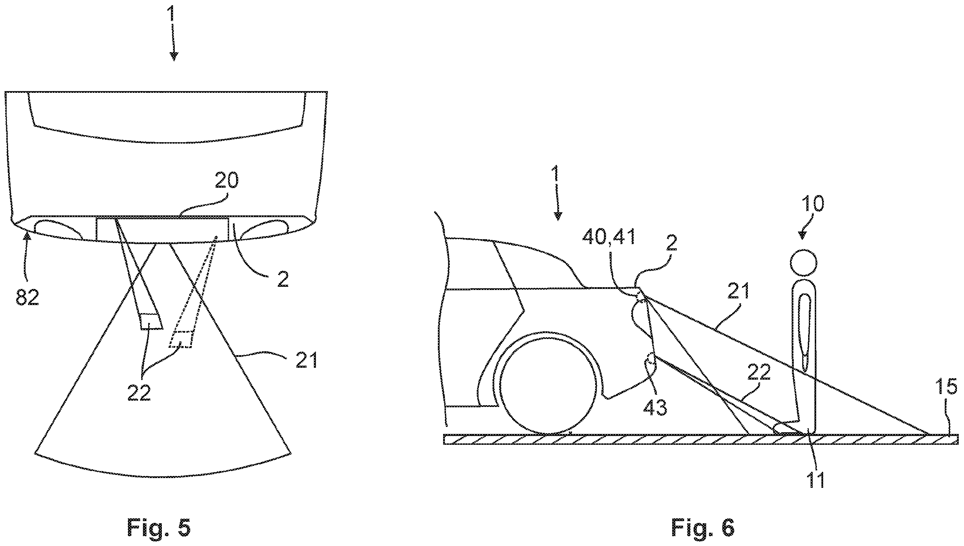

Das Montagemodul 20 kann mit einem Zugangskontrollsystem 14 des Kraftfahrzeuges 1 in Datenkommunikation stehen, wobei beispielsweise ein Türschloss 8 über das Arbeitssignal entsprechend angesprochen werden kann, damit es entriegeln und/oder verriegeln kann, um eine Heckklappe oder eine Tür des Kraftfahrzeuges 1 beispielsweise öffnen oder schließen zu können. Die definierte Gestik des Benutzers 10 in dem Betätigungsbereich 22 kann unterschiedlich sein, beispielsweise kann es vorgesehen sein, dass der Benutzer 10 mit seinem Fuß 11 auf den sichtbaren Betätigungsbereich 22 tritt (siehe Figur 6). Gemäß Figur 5 ist eine weitere Variante gezeigt, in der zwei Betätigungsbereiche 22 visualisiert werden, die der Benutzer 10 zu aktivieren hat, um den Verfahrensschritt mit dem Bezugszeichen 130 gemäß Figur 14 zu aktivieren. Besonders vorteilhaft ist, dass der Detektionsbereich 21 dauerhaft überwacht wird, insbesondere auch dann, wenn der Benutzer gemäß Figur 1 sich außerhalb des Detektionsbereichs 21 befindet. Gemäß Figur 1 liegt der Betätigungsbereich 22 innerhalb des Detektionsbereiches 21, wobei bei der Überwachung des Betätigungsbereiches 22 das Lichtmodul 40 weiterhin nicht sichtbares Licht aussendet, wodurch der Detektionsbereich 21 sich bildet, wobei der optische Sensor 50 gleichzeitig den Betätigungsbereich 22 überprüft. Hierbei empfängt der Sensor 50 Licht aus dem Detektionsbereich 21 sowie Licht aus dem Betätigungsbereich 22. Diese Daten und/oder Signale werden vom Bildsensor 50 aufgenommen, wobei die Kontrolleinheit 60 die Auswertung der Daten durchführt. Die Kontrolleinheit 60 kann auch im Bildsensor, insbesondere dem optischen Sensor 50 integriert sein.

Gemäß Figur 4 ist gezeigt, dass das Sensorsystem 30 gemäß sämtlicher Ausführungsbeispiele eine Vielzahl an Lichtbündel 44 emittieren kann, die zusammengesetzt den Detektionsbereich 21 bilden. Somit weist das Lichtmodul 40 eine Vielzahl an Lichtquellen 41 auf, die jeweils einzelne Lichtbündel 44 in den Außenbereich des Kraftfahrzeuges 1 aussenden, um den Detektionsbereich 21 entstehen zu lassen. Ein Vorteil ist hierbei, dass die Lichtintensität der einzelnen Lichtquellen 41 wesentlich reduziert werden kann, wodurch der Energieverbrauch des optischen Sensorsystems 30 reduziert werden kann.

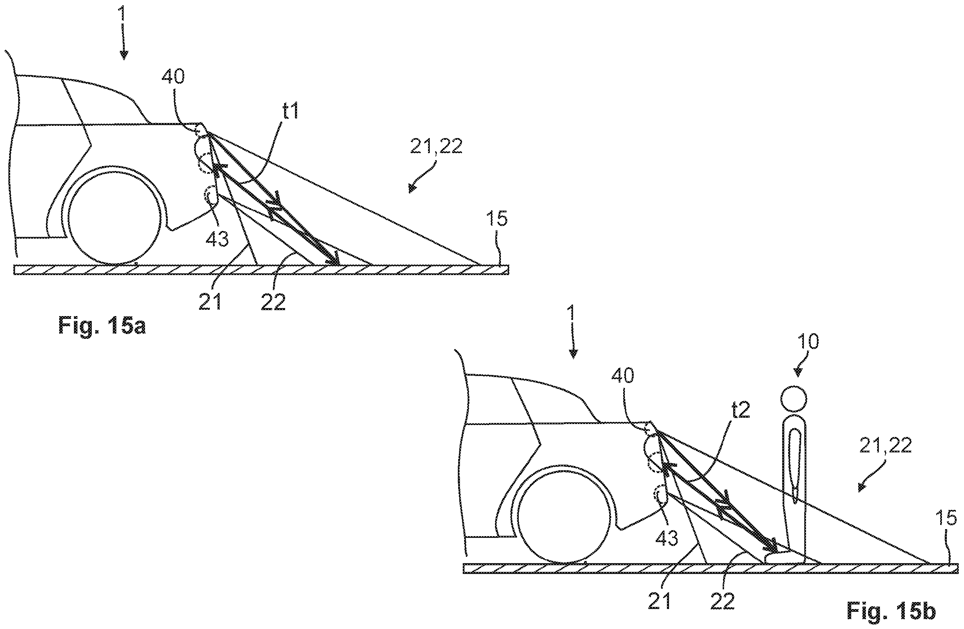

In Figur 15 ist schematisch das Sensorsystem 30 gezeigt, welches in Figur 1, Figur 16 sowie in den übrigen Ausführungsbeispielen eine Überprüfung einer Abstandsänderung durchführen kann, um im Detektionsbereich 21 und/oder im Betätigungsbereich 22 einen Benutzer 10 zu erkennen, der sich dem Kraftfahrzeug 1 nähert. Das Lichtmodul 40 sendet nicht sichtbares Licht in Richtung Betätigungsbereich 22 aus, welches die Zeit t₁ benötigt, um das Lichtmodul 40 zu verlassen und durch den optischen Sensor 50 empfangen zu werden. Nähert sich nun ein Benutzer 10 dem Betätigungsbereich 22, welches in Figur 15 b dargestellt ist, benötigt das Licht 44 die Zeit t₂, um vom Lichtbündel 40 zum optischen Sensor 50 zu gelangen. Somit erhält das erfindungsgemäße Verfahren die wertvolle Information, dass sich ein Benutzer 10 dem Kraftfahrzeug 1 nähert. Vorteilhafterweise wird eine Abstandsüberprüfung erst dann durchgeführt, wenn der Benutzer 10 sich in der Nahzone 23 befindet. Somit lässt sich der Energieaufwand des Montagemoduls während des Betriebs gering halten. Gemäß sämtlicher Ausführungsbeispiele kann das Sensorsystem 30 Bilder des Detektionsbereichs 21 sowie des Betätigungsbereichs 22 empfangen. Die Bilder sind vorteilhafterweise gepulste Bilder und ungepulste Bilder, wobei die gepulsten Bilder durch eine Reflexion eines emittierten, gepulsten Lichts 44 des Sensorsystems 30 entstehen und die ungepulsten Bilder durch das Licht des Detektionsbereichs 21 und des Betätigungsbereichs 22 entstehen. Über die Verwendung von gepulsten Lichts können wirkungsvoll Störlichter aus der Umgebung herausgerechnet werden, sodass eine zuverlässige Überwachung des Detektionsbereiches 21 und des Betätigungsbereiches 22 durchführbar ist.

Bei der Überprüfung des Detektionsbereiches 21 sowie des Betätigungsbereiches 22 werden die gepulsten Bilder mit den ungepulsten Bildern verglichen, wobei die genannte Überprüfung der Abstandsänderung durchgeführt wird, bei der die gepulsten Bilder mit den ungepulsten Bildern verglichen werden. Damit das erfindungsgemäße Montagemodul 20 möglichst wenig Energie verbraucht, ist das Sensorsystem 30 zwischen einem Ruhemodus 31 und einem Arbeitsmodus 32 schaltbar, welches in Figur 14 dargestellt ist. Gemäß Figur 11 ist schematisch der Sensor 50 mit den benachbart dazu angeordneten Lichtquellen 41 dargestellt. Das Anzeigeelement 43 kann im Lichtmodul 40 integriert sein. Ebenfalls ist es denkbar, das Anzeigeelement 43 beabstandet zum Lichtmodul 40 anzuordnen. Der Sensor 50 weist eine Vielzahl an rasterförmigen Pixeln auf. Figur 12 zeigt den Ruhemodus 31 des optischen Sensors 50 an, bei dem lediglich die Hälfte der Pixel ausgewertet wird. Figur 9 zeigt den Arbeitsmodus 32 an, in dem lediglich 4 Pixel überprüft und ausgewertet werden, die dem Betätigungsbereich 22 entsprechen. Bei den übrigen Pixeln handelt es sich um nicht ausgewertete Pixel. Die weiß gezeigten Pixel gemäß Figur 8 und Figur 9 werden bei der Auswertung nicht berücksichtigt, sodass Energie während des Betriebs des Montagemoduls 20 einsparbar ist.

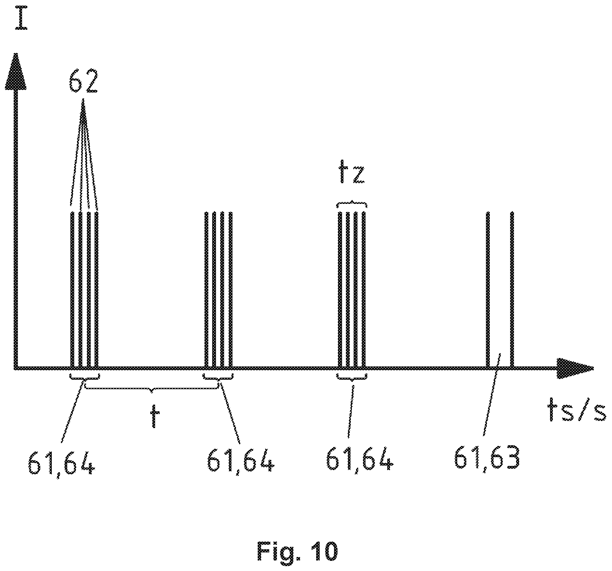

Figur 10 enthält eine Auftragung einer Lichtintensität I über die Zeit ts. Wie dargestellt ist, wird mit Hilfe des Sensors 50 nach jeder Zeitspanne t ein Bild 61 aufgenommen, wobei in der Figur 10 jeweils die Zeitspanne dargestellt ist, die für ein Bild 61 benötigt wird. Hierbei kann es sich um ein Erkennungsbild 64 oder ein Vergleichsbild 63 handeln. Das Erkennungsbild 64 ist mit Hilfe von Lichtpulsen 62 des Lichtmoduls 40 aufgenommen worden. Hierbei ist eine Vielzahl von Lichtpulsen 62 notwendig, um ein Bild 61 zu erzeugen. Die Lichtpulse 62 werden mit einer vorgegebenen Pulsfrequenz vom Lichtmodul 40 emittiert. Hierbei kann die Pulsfrequenz während des Ruhemodus 31 geringer sein als die des Arbeitsmodus 32. Ebenso kann die Bildfrequenz, die sich durch die Zeitspanne t ergibt, in einem Ruhemodus 31 geringer sein als in einem Arbeitsmodus 32. Das von dem Sensor 50 empfangene Licht der Lichtpulse 62 eines Bildes 61 wird aufintegriert oder aufsummiert, um das Bild 61 zu erzeugen. Um eine Abstandsmessung durchzuführen, gibt das optische Sensorsystem 30 ein Zeitintervall tz vor, in dem die Lichtpulse 62 ein Bild 61 erzeugen. Der Abstand des Benutzers 10 zum optischen Sensor 50 wird in Abhängigkeit von der Intensität der Lichtpulse 62 im Zeitintervall tz bestimmt. In dem Vergleichsbild 63 wird ein Bild 61 aufgenommen, ohne dass Lichtpulse 62 des Lichtmoduls 40 den Bildsensor 50 erreichen. Hierzu emittiert das Lichtmodul 40 kein Licht. Die Pulsung des Lichtes gemäß Figur 10 ist beispielsweise in Figur 1 sowie in sämtlichen Ausführungsbeispielen anwendbar, um insbesondere Störlichter herauszurechnen.

Gemäß sämtlicher Ausführungsbeispiele kann der Betätigungsbereich 22 sich am Boden 15 befinden. Ebenfalls ist es denkbar, dass sich der Betätigungsbereich 21 in einem Abstand zum Boden 15 und auf Höhe des Sensorsystems 30 insbesondere auf Höhe des Emblems 80 befindet. Der Betätigungsbereich 22 sollte lediglich für den Benutzer 10 sichtbar sein, um über eine entsprechende Handlung, Gestik diesen Betätigungsbereich 22 anzusprechen. Beispielsweise kann der Betätigungsbereich 22 derart ausgestaltet sein, dass ein Hologramm für den Benutzer 10 entsteht, der z. B. freischwebend vor dem optischen Sensorsystem 30 beabstandet vom Kraftfahrzeug 1 und dem Boden 15 vom Benutzer zu aktivieren ist. Selbstverständlich schließt die Erfindung mit ein, dass weitere Signale am Kraftfahrzeug auslösbar sind, wie z. B. die Bewegung einer Fensterscheibe, falls der Benutzer 10 die entsprechende Handlung im Verfahrensschritt 130 gemäß Figur 14 ausübt.

Gemäß Figur 8 und Figur 9 weist das optische Sensorsystem 30 ein Beleuchtungselement 45 auf, das in unterschiedliche Beleuchtungszustände geschaltet werden kann, die schematisch in Figur 14 gezeigt sind. Während der Überwachung des Detektionsbereiches 21 im Verfahrensschritt 100, ist das Beleuchtungselement 45 deaktiviert und emittiert somit kein Licht, welches mit dem Bezugszeichen 150 gezeigt ist. Falls die Authentifizierungsüberprüfung im Verfahrensschritt 110 positiv ist, nimmt das Beleuchtungselement 45 einen ersten Beleuchtungszustand ein, der das Bezugszeichen 160 gemäß Figur 14 trägt. Im vorliegenden Ausführungsbeispiel entsteht ein dauerhaftes Licht am Beleuchtungselement 45, welches vom Benutzer 10 erkannt werden kann. Nun erfolgt der Verfahrensschritt 120, bei dem der Betätigungsbereich 22 durch das Sensorsystem 30 überprüft wird. Der erste Beleuchtungszustand 160 gibt dem Benutzer 10 die Information, seine Hand in die Nähe des Emblems 80 zu bewegen, insbesondere den Betätigungsbereich 22, der in der Nähe des Emblems 80 liegt, zu aktivieren. Ist dies durch den Benutzer 10 erfolgt, wechselt das Beleuchtungselement 45 in den zweiten Beleuchtungszustand 170, das ein Blinksignal darstellt. Hierdurch erhält der Benutzer 10 die Information, seine Hand aus dem Betätigungsbereich 22 zu entfernen. Anschließend wechselt das Beleuchtungselement 45 in einen dritten Beleuchtungszustand 180, welches ebenfalls ein Blinksignal ist, wobei die einzelnen Lichtsignale länger aktiv sind als die kürzeren Lichtsignale aus dem Beleuchtungszustand 170.

Das Erkennen einer Verschmutzung oder eines Defekts kann im Verfahrensschritt 140 erfolgen, wobei die Kontrolleinheit 60 beispielsweise die Information des Verfahrensschritts 140 erhält. Z. B. ist es denkbar, dass gemäß des Verfahrensschritts 140 die Notbetätigung 90 aktiviert wird bzw. betriebsbereit geschaltet wird, damit eine manuelle Betätigung der Notbetätigung 90 durch den Benutzer 10 ein Arbeitssignal für das Fahrzeug 1 gemäß Verfahrensschritt 130 auslösen kann.

Das Montagemodul 20 gemäß Figur 1 ist sowohl im Heckbereich 82 gemäß Figur 5, Figur 6 und Figur 8 einsetzbar als auch im Seitenbereich des Kraftfahrzeuges gemäß Figur 7. Hierbei sind die Verfahrensschritte gemäß Figur 14 auf sämtliche Ausführungsbeispiele gemäß Figur 1 bis Figur 9, Figur 15 sowie Figur 16 anwendbar. Figur 9 kann das Montagemodul 20 und/oder die Verfahrensschritte gemäß Figur 14 mit enthalten. Figur 8 kann auch derart weitergebildet sein, dass das Beleuchtungselement 45 als Anzeigeelement 43 gemäß Figur 1 arbeitet. Zudem ist es denkbar, dass eine Beleuchtung des Nummernschildes 7 (Figur 8) über das Anzeigeelement 43 und/oder das Beleuchtungselement 45 zusätzlich erfolgen kann. Gemäß Figur 2 und Figur 3 wird schematisch sehr deutlich, dass zwar ein sehr großer Detektionsbereich 21 über das erfindungsgemäße optische Sensorsystem 30 überwacht werden kann. Da jedoch die Nahzone 23 sowie der Betätigungsbereich 22 sehr klein ist, verglichen zum Detektionsbereich 21, kann der Betrieb des optischen Sensorsystems 30 energiesparend durchgeführt werden. Einen wesentlichen Beitrag für die Energieeinsparung liefert die Idee, dass das optische Sensorsystem 30 zwischen einem Ruhemodus 31 und einem Arbeitsmodus 32 schaltbar ist und eine Authentifizierungsüberprüfung gemäß Schritt 110 erst dann durchführbar ist, wenn der Benutzer 10 sich in der Nahzone 23 befindet.

Figur 16 mit Figur 17 zeigt ein nicht-erfindungsgemäßes Montagemodul 20, insbesondere ein nicht-erfindungsgemäßes Emblem 80, das mit einem Sensorsystem 30, 70 ausgeführt ist. Das Sensorsystem 30, 70 ist ein optisches Sensorsystem, das einen optischen Sensor 50, insbesondere eine Kamera aufweist. Zudem ist ein nicht-optischer Sensor 70 vorgesehen, der im vorliegenden Ausführungsbeispiel ein kapazitiver Sensor ist. Selbstverständlich kann der nicht-optische Sensor 70 im Rahmen dieser Erfindung auch ein Näherungssensor oder ein Berührungssensor sein. Der Sensor 70 überwacht den Detektionsbereich 21. Der optische Sensor 50 hingegen den Betätigungsbereich 22. Entsprechend den Ausführungen zu den bereits beschriebenen Ausführungsbeispielen erfolgt zunächst eine Überwachung des außerhalb des Kraftfahrzeugs 1 liegenden Detektionsbereich 21 über den nicht-optischen Sensor 70. Es erfolgt eine Erkennung eines Benutzers 10 im Detektionsbereich 21. Des Weiteren wird ein Signal für den Start einer Authentifizierungsüberprüfung zwischen dem ID-Geber 13, den der Benutzer 10 bei sich trägt und dem Kraftfahrzeug 1 ausgelöst. Anschließend überwacht der Sensor 50 den Betätigungsbereich 22, wobei entsprechend einer definierten Gestik des Benutzers im Betätigungsbereich 22 ein Arbeitssignal für das Kraftfahrzeug 1 bereitgestellt wird. Im vorliegenden Ausführungsbeispiel ist es erforderlich, dass der Benutzer 10 sich in einem definierten Zeitfenster nahe dem Emblem 80 aufhält, insbesondere einen Teilbereich seines Körpers wie Hand, Ellenbogen im Bereich des kapazitiven Sensors 70 positioniert. Ist diese definierte erste Handlung des Benutzers 10 korrekt, erfolgt die Authentifizierungsüberprüfung. Ist die Authentifizierungsüberprüfung positiv, das bedeutet der Benutzer 10 weist den berechtigten ID-Geber 13 auf, wird das Beleuchtungselement 45 in den ersten Beleuchtungszustand eingeschaltet. Das Emblem 80 weist im Inneren eine Lichtquelle 47 auf, insbesondere eine LED, OLD etc. Zwischen der Lichtquelle 47 und dem Beleuchtungselement 45 ist ein Lichtleitelement 48 angeordnet, so dass im ersten Beleuchtungszustand bzw. in allen anderen Beleuchtungszuständen zuverlässig Licht aus dem Beleuchtungselement 45 emittiert werden kann, welches gut sichtbar für den Benutzer ist. Des Weiteren können die elektronischen Bauteile beispielsweise an einer Leiterplatte 46 innerhalb des Emblems 80 angeordnet sein. Gemäß Figur 16 und Figur 17 ist in dem dargestellten Ausführungsbeispiel das Beleuchtungselement 45 ringförmig ausgeführt. Selbstverständlich sind alternative geometrische Formen denkbar, um diverse Beleuchtungszustände am Emblem 80 für den Benutzer entstehen zu lassen.

Nachdem eine positive Authentifizierung stattgefunden hat, erfolgt eine Überwachung des Betätigungsbereiches 22 über den optischen Sensor 50. Der Betätigungsbereich 22 kann sich beispielsweise in unmittelbarer Nähe des Beleuchtungselementes 45 befinden. Z. B. ist es denkbar, dass über eine leichte Berührung oder starke Annäherung an das Beleuchtungselement 45 eine zweite Handlung des Benutzers 10 definiert ist, um das Arbeitssignal für das Kraftfahrzeug 1 zu triggern. Die zweite Handlung kann beispielsweise eine definierte Gestik des Benutzers sein. Hierbei ist es denkbar, dass der Benutzer in einem definierten Zeitfenster die entsprechende Gestik im oder am Betätigungsbereich 22 ausführen muss.

Zudem weist das Emblem 80 eine Notbetätigung 90 auf, um im Falle einer Störung bezogen auf das Sensorsystem 30, 70 das Arbeitssignal für das Kraftfahrzeug 1 auszulösen. Die Funktionsweise dieser Notbetätigung 90 entspricht im Wesentlichen den Ausführungen gemäß Figur 1. Das Emblem 80 gemäß Figur 16 sowie auch gemäß Figur 1 weist zur Außenseite hin eine Abdeckung 83 auf. Die Abdeckung 83 ist derart ausgebildet, dass die elektronischen Bauteile im inneren des Emblems 80 nicht sichtbar sind. Jedoch weist die Abdeckung 83 die Eigenschaft auf, dass der Betätigungsbereich 22 sowie der Detektionsbereich 21 zuverlässig überwacht werden können. Insbesondere im Bereich des optischen Sensors 50 ist die Abdeckung 83 als einseitig durchsichtig ausgeführt, damit der optische Sensor 50 zuverlässig den Betätigungsbereich 22 überwachen kann. In einer weiteren Funktion des Ausführungsbeispiels gemäß Figur 16 und 17 ist es denkbar, dass der optische Sensor 50, insbesondere die Kamera auch während der Fahrt des Kraftfahrzeuges den rückwertigen Bereich überwachen kann. Ebenfalls ist es in einer weiteren Ausführungsalternative denkbar, die explizit nicht gezeigt ist, dass das Emblem bei einer Rückwärtsfahrt aus der in Figur 16 geschlossenen Stellung in eine Offenstellung sich bewegen kann, und zwar gemäß Figur 16 nach rechts in den Außenbereich in Richtung ID-Geber 13. Somit erhält der optische Sensor 50, insbesondere die Kamera, ein entsprechendes Sichtfeld, um als Einparkhilfe für den Benutzer 10 zu dienen. Beispielsweise ist es denkbar, dass die Kamera starr und unverändert in ihrer Position gemäß Figur 16 verbleibt. Ebenfalls ist es denkbar, dass in der ausgeschwenkten Stellung des Emblems 80 ebenfalls die Kamera in eine definierte Stellung schwenkt, um einen optimalen Sichtraum für den Benutzer 10 beim Rückwärtseinparken zu beobachten und aufnehmen zu können. Bei dem optischen Sensor 50 kann es sich beispielsweise auch um einen LDPD- oder CCD-Sensor handeln.

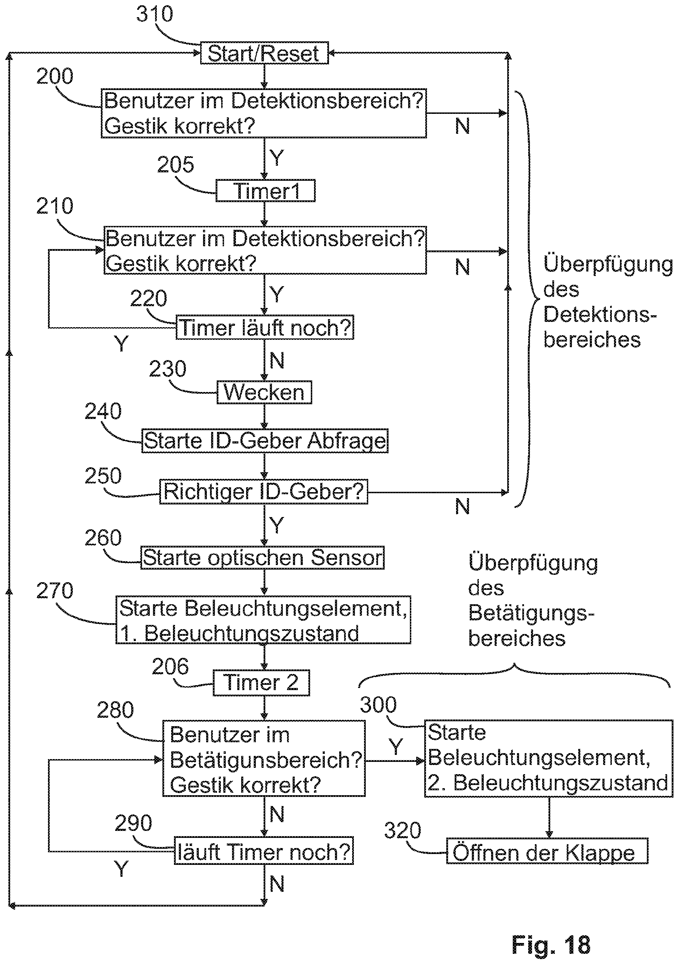

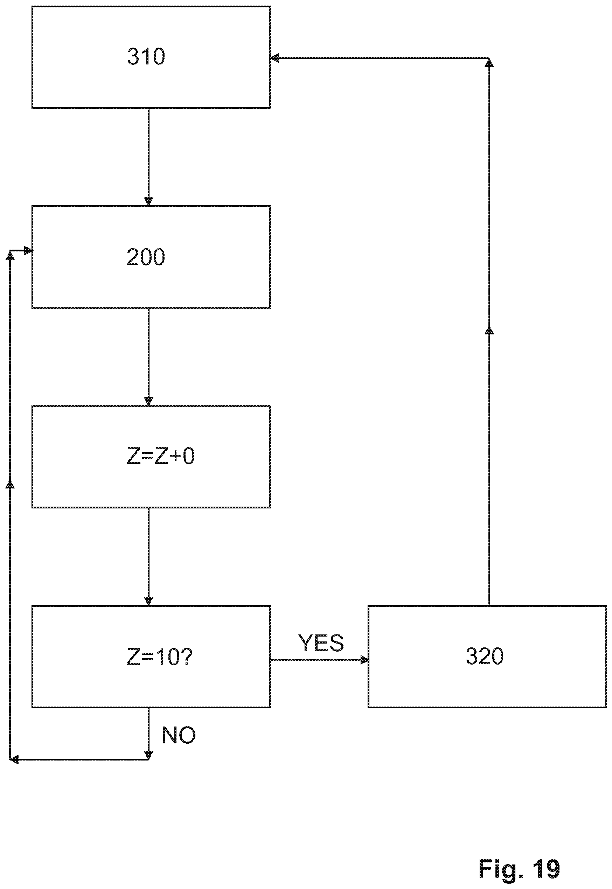

Figur 18 sowie Figur 19 zeigen einen weiteren Verfahrensablauf eines Ausführungsbeispiels eines nicht-erfindungsgemäß Montagemoduls 20, insbesondere eines nichterfindungsgemäßen Emblems 80, wobei der Verfahrensablauf sowohl die Überwachung des Detektionsbereiches 21, als auch die Überwachung des Betätigungsbereiches 22 berücksichtigt. Hierbei ist beispielsweise das Emblem 80 gemäß Figur 16 bzw. Figur 17 betreibbar. Im Verfahrensschritt 100 erfolgt zunächst über den nicht-optischen Sensor 70 eine Überprüfung des Detektionsbereiches 21. Befindet sich der Benutzer 10 mit seiner Hand oder mit seinem Ellenbogen am nicht-optischen Sensor 70 wird dieses durch diesen Sensor 70 erkannt. In Figur 18 ist zusätzlich eine Zähleinheit 205 eingebaut, die als eine Art Timer 205 arbeitet. Der Timer 205 kann mit einem definierten Zeitfenster ausgeführt sein, insbesondere ein bis drei Sekunden. Solange der Sensor 70 auch im Verfahrensschritt 210 den Benutzer entsprechend erkennt, beispielsweise kapazitiv, erfolgt die Abfrage im Verfahrensschritt 210. Falls innerhalb des vorgegebenen Zeitfensters der Sensor 70 den Benutzer nicht mehr innerhalb des Detektionsbereiches 21 detektiert, fährt das System zurück zum Start 310. Falls der Timer 205 das vorgegebene Zeitfenster überschritten hat und die Überprüfung gemäß Verfahrensschritt 210 positiv ist, das bedeutet, dass die erste Handlung des Benutzers der entsprechenden definierten Handlung des Gesamtsystems entspricht, erfolgt der Verfahrensschritt 230, indem die Steuerelektronik des Kraftfahrzeuges 1 und/oder des Montagemoduls 20 geweckt wird. Zuvor wurde im Verfahrensschritt 220 erkannt, dass der Timer 205 entsprechend aus dem Zeitfenster gelaufen ist, insbesondere das z. B. das Zeitfenster von ein bis drei Sekunden bereits durchlaufen ist. Anschließend erfolgt der Start der ID-Geberabfrage im Verfahrensschritt 240, wobei im Verfahrensschritt 250 die Authentifizierungsüberprüfung zwischen dem ID-Geber 13 und dem Kraftfahrzeug 1 durchgeführt wird. Falls der ID-Geber 13 nicht der "Richtige" ist, fängt das System am Verfahrensschritt 310 wieder an. Falls jedoch die Authentifizierungsüberprüfung positiv ist, wird die Überwachung des Detektionsbereiches 21 beendet und die Überwachung des Betätigungsbereiches 22 startet, indem der Verfahrensschritt 260 initiiert wird, indem der optische Sensor 50, insbesondere die Kamera oder der LDPD- oder der CCD-Chip aktiviert werden. Z. B. ist es denkbar, dass das Beleuchtungselement 45 des optischen Sensorsystems 30, 70 in einen ersten Beleuchtungszustand gebracht wird, welches im Verfahrensschritt 270 erfolgt. Z. B. ist es denkbar, dass im Verfahrensschritt 270 das Beleuchtungselement 45 langsam blinkt. Gleichzeitig startet ein zweiter Timer 206, der ebenfalls als Zähleinheit arbeitet. Das Zeitfenster dieser Zähleinheit bzw. dieses Timers 206 kann beispielsweise ebenfalls ein bis drei Sekunden dauern. Im Verfahrensschritt 280 wird überprüft, in wie weit die richtige Gestik und/oder Handlung des Benutzers 10 innerhalb des Betätigungsbereiches 22 erfolgt ist. Liegt hier ein positives Ergebnis vor, erfolgt der Verfahrensschritt 300, bei dem das Beleuchtungselement in einen weiteren Beleuchtungszustand gebracht wird, beispielsweise dass das Beleuchtungselement schneller blinkt oder ein Dauerlicht produziert wird. Anschließend erfolgt Verfahrensschritt 320, bei dem die Heckklappe sich öffnet. Bei positiver Erkennung der Gestik des Benutzers im Verfahrensschritt 280 erfolgt zuvor jedoch die Bereitstellung des Arbeitssignals für das Kraftfahrzeug. Ist die Abfrage gemäß Verfahrensschritt 280 negativ und die Zähleinheit gemäß Verfahrensschritt 290 läuft immer noch (d. h. beispielsweise das Zeitfenster zwischen ein bis drei Sekunden ist noch nicht durchschritten) erfolgt eine Abfrage gemäß Verfahrensschritt 280. Falls der Timer gemäß Verfahrensschritt 290 bereits abgelaufen ist und die Überprüfung bei 280 ist negativ, fährt das System zurück zum Start 310.

Eine notwendige Bedingung, dass der Verfahrensschritt 200 startet, ist, dass eine Abfrage zuvor erfolgt, inwieweit die Fahrzeuggeschwindigkeit ≤ 3 km pro Stunde ist oder das Kraftfahrzeug steht und sich nicht bewegt. Erst diese Bedingung muss erfüllt sein, damit eine Überwachung des Detektionsbereiches 21 und/oder des Bestätigungsbereiches 22 gemäß Figur 18 erfolgen kann.

Figur 19 zeigt eine weitere Ausführungsvariante, die in Figur 18 integrierbar ist. Figur 19 weist eine Schutzabfrage auf, die den Überwachungsvorgang bezüglich des Detektionsbereiches 21 mindestens für eine bestimmte Zeit unterbricht und/oder sperrt, wenn eine bestimmte Anzahl an Handlungen des Benutzers 10 erkannt wurde, die nicht der definierten Handlung entspricht, um vom Verfahrensschritt 220 zum Verfahrensschritt 230 zu gelangen. Das bedeutet, wenn unbewusst der nicht-optische Sensor 70 mehrfach einen Gegenstand im Detektionsbereich 21 zwar erkennt, jedoch das Zeitfenster z.B. gemäß des Timers 205 nie durchlaufen wird. In einer möglichen Ausführungsvariante, ist es beispielsweise denkbar, dass der Benutzer 10 eine erste definierte Handlung im Detektionsbereich 21 durchführen muss, damit ein Start der Authentifizierungsüberprüfung gemäß den Verfahrensschritten 240 bzw. 250 gestartet wird. Hierbei ist es denkbar, dass der Benutzer beispielsweise seinen Ellenbogen oder seine Hand drei Sekunden lang in der Nähe des Sensors 70 hält. Erfolgt jedoch mehrfach eine Annäherung eines Benutzers, der nicht berechtigt ist, an den Sensor 70, wobei der Sensor 70 lediglich eine Sekunde lang angesprochen wird, wobei diese Handlung mehrfach wiederholt wird, erfolgt im Verfahrensschritt 320 eine Sperrung der Überprüfung des Detektionsbereiches 21 bzw. des Betätigungsbereiches 22 mindestens für eine bestimmte Zeit. Gemäß Figur 19 ist beispielhaft gezeigt, dass nach zehn Ansprechungsversuchen eines Benutzers 10 im Detektionsbereich 21 bzw. am nicht-optischen Sensor 70 eine Sperrung erfolgt.

Beispielsweise ist es denkbar, dass der nicht-optische Sensor 70 ein kapazitiver Sensor ist, der über die definierte Handlung des Benutzers 10 unter einen vorgegebenen Schwellwert fällt. Falls dieser Schwellwert nicht erreicht ist, liegt auch nicht die korrekte definierte Handlung des Benutzers 10 vor. Dieses kann in den Verfahrensschritten 200 sowie 210 integriert sein.

### Bezugszeichenliste

- 1: Kraftfahrzeug
- 2: Heckklappe (bewegliches Teil)
- 3: Seitentür, Schiebtür (bewegliches Teil)
- 4: B-Säule
- 5: Türgriff
- 6: Griffleiste
- 7: Nummernschild
- 8: Türschloss
- 10: Benutzer
- 11: Fuß
- 12: Hand
- 13: ID-Geber
- 14: Zugangskontrollsystem
- 15: Boden
- 20: Montagemodul
- 21: Detektionsbereich
- 22: Betätigungsbereich
- 23: Nahzone
- 24: Fernzone
- 25: Aufnahme
- 30: optisches Sensorsystem
- 31: Ruhemodus
- 32: Arbeitsmodus
- 40: Lichtmodul
- 41: Lichtquelle
- 42: Linsensystem
- 43: Anzeigeelement
- 44: Licht, Lichtbündel, Lichtkegel
- 45: Beleuchtungselement
- 46: Leiterplatte
- 47: Lichtquelle, LED, OLED
- 48: Lichtleitelement
- 50: optischer Sensor
- 51: Linsensystem
- 60: Kontrolleinheit
- 61: Bild gepulst
- 62: Lichtpuls
- 63: Vergleichsbild
- 64: Erkennungsbild
- 70: nicht-optischer Sensor
- 80: Emblem
- 81: Felder
- 82: Kraftfahrzeugheck
- 83: Abdeckung
- 90: Notbetätigung
- 91: Aktivierungsmittel, Taster, Schalter
- 100: Verfahrensschritt
- 110: Verfahrensschritt
- 120: Verfahrensschritt
- 130: Verfahrensschritt
- 140: Verfahrensschritt
- 150: Beleuchtungszustand
- 160: Beleuchtungszustand
- 170: Beleuchtungszustand
- 180: Beleuchtungszustand
- 200: Verfahrensschritt
- 205: Timer, Zähleinheit
- 206: Timer, Zähleinheit
- 210: Verfahrensschritt
- 220: Verfahrensschritt
- 230: Verfahrensschritt
- 240: Verfahrensschritt
- 250: Verfahrensschritt
- 260: Verfahrensschritt
- 270: Verfahrensschritt
- 280: Verfahrensschritt
- 290: Verfahrensschritt
- 300: Verfahrensschritt
- 310: Start
- 320: Verfahrensschritt
- 330: Verfahrensschritt

## Patentansprüche

1. Emblem (80) für ein Kraftfahrzeug (1), mit
einem optischen Sensorsystem (30,70), wobei das optische Sensorsystem (30,70) in dem Emblem (80) ausgebildet ist, wobei das optische Sensorsystem (30,70) geeignet ist,
a) einen außerhalb des Kraftfahrzeuges (1) liegenden Detektionsbereich (21) zu überwachen,
b) im Falle eines Erkennens eines Benutzers (10) im Detektionsbereich (21) ein Signal für den Start einer Authentifizierungsüberprüfung zwischen einem ID-Geber (13) und dem Kraftfahrzeug (1) auszulösen,
c) einen außerhalb des Kraftfahrzeuges (1) liegenden, sich vom Detektionsbereich (21) unterscheidenden Betätigungsbereich (22) zu überwachen,
d) im Falle eines Erkennens eines Benutzers (10) im Betätigungsbereich (22) ein Arbeitssignal für das Kraftfahrzeug (1) bereitzustellen,
wobei das optische Sensorsystem (30) einen optischen Sensor (50) und ein Lichtmodul (40) aufweist, mit dem Licht (44) emittierbar ist, um den Detektionsbereich (21) entstehen zu lassen, wobei der Sensor (50) ausgebildet ist, Licht aus dem Detektionsbereich (21) und/oder dem Betätigungsbereich (22) zu empfangen, wobei der Detektionsbereich (21) für den Benutzer (10) nicht sichtbar ist.

2. Emblem (80) nach Anspruch 1,
**dadurch gekennzeichnet,**
**dass** das Sensorsystem (30,70) geeignet ist, ein am Sensorsystem (30,70) angeordnetes Beleuchtungselement (45) für einen ersten Beleuchtungszustand (160) einzuschalten, falls die Authentifizierungsüberprüfung gemäß b) positiv ist.

3. Emblem (80) nach Anspruch 2,
**dadurch gekennzeichnet,**
**dass** bei der Überwachung des Betätigungsbereichs (22) durch das Sensorsystem (30) das Beleuchtungselement (45) in einen zweiten Beleuchtungszustand wechselt.

4. Emblem (80) nach einem der Ansprüche 2 bis 3,
**dadurch gekennzeichnet,**
**dass** der Betätigungsbereich (22) in der Nähe, benachbart und/oder beabstandet zum Beleuchtungselement (45) oder am Beleuchtungselement (45) liegt, wobei insbesondere das Beleuchtungselement (45) ringartig und/oder sternartig ausgebildet ist.

5. Emblem (80) nach einem der Ansprüche 2 bis 4,
**dadurch gekennzeichnet,**
**dass** gemäß d) im Falle eines Erkennens eines Benutzers (10) im Betätigungsbereich (22) das Sensorsystem (30) geeignet ist, das Beleuchtungselement (45) in einen dritten Beleuchtungszustand (180) einzuschalten, der sich von dem ersten (160) und/oder dem zweiten Beleuchtungszustand (170) unterscheidet.

6. Emblem (80) nach einem der vorhergehenden Ansprüche,
**dadurch gekennzeichnet,**
**dass** das Sensorsystem (30,70) einen Näherungssensor oder einen Berührungssensor oder einen kapazitiven Sensor (70) aufweist.

7. Emblem (80) nach einem der vorhergehenden Ansprüche,
**dadurch gekennzeichnet,**
**dass** Lichtmodul (40) eine Vielzahl an Lichtquellen (41) aufweist.

8. Emblem (80) nach einem der vorhergehenden Ansprüche,
**dadurch gekennzeichnet,**
**dass** das optische Sensorsystem (30,70) einen Näherungssensor oder einen Berührungssensor oder einen kapazitiven Sensor (70) aufweist, um den Detektionsbereich (21) entstehen zu lassen und/oder den Detektionsbereich (21) zu überwachen.

9. Emblem (80) nach einem der vorhergehenden Ansprüche,
**dadurch gekennzeichnet,**
**dass** ein Anzeigeelement (43) vorgesehen ist, um den Betätigungsbereich (22) entstehen zu lassen, wobei insbesondere der Betätigungsbereich (22) für den Benutzer (10) sichtbar ist.

10. Emblem (80) nach einem der vorhergehenden Ansprüche,
**dadurch gekennzeichnet,**
**dass** das Sensorsystem (30) derart ausgebildet ist, dass der Detektionsbereich (21) in mindestens zwei Zonen (23, 24) aufgeteilt ist, in eine Nahzone (23) und in eine Fernzone (24), wobei die Nahzone (23) in einem geringeren Abstand zum Sensorsystem (30) liegt als die Fernzone (24), wobei ein Erkennen des Benutzers (10) gemäß Schritt b) erst dann erfolgt, wenn der Benutzer (10) sich in der Nahzone (23) befindet.

11. Emblem (80) nach einem der vorhergehenden Ansprüche,
**dadurch gekennzeichnet,**
**dass** das Lichtmodul (40) und/oder ein Sensor (50) ein Linsensystem (51) aufweisen, wobei insbesondere das Linsensystem (51) einen Filter aufweist und/oder dass das Sensorsystem (30) ein starres Linsensystem (51) aufweist.

12. Emblem (80) nach einem der vorhergehenden Ansprüche,
**dadurch gekennzeichnet,**
**dass** das Emblem (80) in einer Aufnahme (25) angeordnet ist, die zur Montage des Emblems (80) an dem Kraftfahrzeug (1) ausgebildet ist, und/oder dass das Emblem (80) eine Vielzahl an unabhängigen Feldern (81) aufweist, wobei jeweils in einem Feld (81) mindestens ein der folgenden Bauteile angeordnet ist: Lichtmodul (40), Anzeigeelement (43), optische Sensor (50), Beleuchtungselement (45), kapazitiver Sensor (70), eine Notbetätigung (90) mit Aktivierungsmittel (91).

13. Emblem (80) nach einem der vorhergehenden Ansprüche,
**dadurch gekennzeichnet,**
**dass** das Emblem (80) geeignet ist, am Kraftfahrzeugheck (82) oder an einer Kraftfahrzeugseite befestigt zu werden, insbesondere dass das Emblem (80) beweglich ist.

14. Emblem (80) nach einem der vorhergehenden Ansprüche,
**dadurch gekennzeichnet,**
**dass** das optische Sensorsystem (30) einen Sensor (50) aufweist, wobei der optische Sensor (50) ein LDPD-Sensor oder eine Kamera ist.

15. Emblem (80) nach einem der vorhergehenden Ansprüche,
**dadurch gekennzeichnet,**
**dass** das Sensorsystem (30) derart ausgebildet ist, dass sich der Detektionsbereich (21) zumindest teilweise oberhalb einer Bodenfläche (15), auf der das Kraftfahrzeug (1) steht, befindet.

16. Emblem (80) nach einem der vorhergehenden Ansprüche,
**dadurch gekennzeichnet,**
**dass** das Arbeitssignal ein Signal zum Entriegeln und/oder Verriegeln und/oder Öffnen und/oder Verschließen eines beweglichen Teils des Kraft Kraftfahrzeuges (2, 3) ist, wobei insbesondere das bewegliche Teil eine Heckklappe (2) oder eine Seitentür (3) oder eine Schiebetür ist.

17. Emblem (80) nach einem der vorhergehenden Ansprüche,
**dadurch gekennzeichnet,**
**dass** ein Anzeigeelement (43) vorgesehen ist, um den Betätigungsbereich (22) entstehen zu lassen, wobei das Lichtmodul (40) sowie das Anzeigeelement (43) und/oder ein Beleuchtungselement (45) derart ausgerichtet sind, dass der Betätigungsbereich (22) näher am Kraftfahrzeug (1) sich befindet als der Detektionsbereich (21), insbesondere dass zwei Betätigungsbereiche vorgesehen sind.

18. Verfahren, das insbesondere ein Emblem (80) nach einem der Ansprüche 1 bis 17 betreibt, zur Auslösung eines Arbeitssignals für ein Kraftfahrzeug (1), mit einem Emblem (80), das ein optisches Sensorsystem (30) aufweist, wobei das Sensorsystem (30) folgende Schritte durchführt:
a) Überwachen eines außerhalb des Kraftfahrzeuges (1) liegenden Detektionsbereichs (21),
b) im Falle eines Erkennens eines Benutzers (10) im Detektionsbereich (21) Auslösen eines Signal für den Start einer Authentifizierungsüberprüfung zwischen einem ID-Geber (13) und dem Kraftfahrzeug (1),
c) Überwachen eines außerhalb des Kraftfahrzeuges (1) liegenden, sich vom Detektionsbereich (21) unterscheidenden Betätigungsbereichs (22),
d) im Falle eines Erkennens eines Benutzers (10) im Betätigungsbereich (22) Bereitstellen des Arbeitssignals für das Kraftfahrzeug (1),
wobei das optische Sensorsystem (30,70) in dem Emblem (80) ausgebildet ist, wobei
- das optische Sensorsystem (30) einen optischen Sensor (50) und ein Lichtmodul (40) aufweist, mit dem Licht (44) emittiert wird, um den Detektionsbereich (21) entstehen zu lassen, wobei
- der Sensor (50) Licht aus dem Detektionsbereich (21) und/oder dem Betätigungsbereich (22) empfängt, wobei der Detektionsbereich (21) für den Benutzer (10) nicht sichtbar ist.

19. Verfahren nach Anspruch 18,
**dadurch gekennzeichnet,**
**dass** nach einer positiven Authentifizierung gemäß b) ein am Sensorsystem (30) angeordnetes Beleuchtungselement (45) in einem ersten Beleuchtungszustand (160) betrieben wird.

20. Verfahren nach Anspruch 19,
**dadurch gekennzeichnet,**
**dass** gemäß c) das Beleuchtungselement (45) in einem zweiten Beleuchtungszustand (170) betrieben wird, der sich vom ersten Beleuchtungszustand (160) unterscheidet.

21. Verfahren nach Anspruch 19 oder 20,
**dadurch gekennzeichnet,**
**dass** gemäß Schritt d) das Beleuchtungselement (45) in einem dritten Beleuchtungszustand (180) betrieben wird, der sich vom ersten (160) und/oder vom zweiten Beleuchtungszustand (170) unterscheidet, wobei insbesondere ein Öffnungsvorgang eines beweglichen Teils (2, 3) des Kraftfahrzeuges (1) ausgeführt wird.

22. Verfahren nach einem Ansprüche 18 bis 21,
**dadurch gekennzeichnet,**
**dass** der Detektionsbereich (21) in mindestens zwei Zonen (23, 24) aufgeteilt ist, in eine Nahzone (23) und eine Fernzone (24), wobei die Nahzone (23) in einem geringeren Abstand zum Sensorsystem (30) liegt als die Fernzone (24), wobei ein Erkennen des Benutzers (10) gemäß Schritt b) erst dann erfolgt, wenn der Benutzer (10) sich in der Nahzone (23) befindet, insbesondere dass der Detektionsbereich (21) dauerhaft überwacht wird und/oder dass Schritt b) erfolgt, wenn der Benutzer sich in der Nahzone (23) befindet.

23. Verfahren nach einem der Ansprüche 18 bis 22,
**dadurch gekennzeichnet,**
**dass** das Erkennen des Benutzers (10) gemäß Schritt c) oder d) eine definierte Gestik und/oder Handlung des Benutzers (10) erfordert.

24. Verfahren nach einem der Ansprüche 18 bis 23,
**dadurch gekennzeichnet,**
**dass** das Bereitstellen des Arbeitssignals gemäß Schritt d) nur dann erfolgt, wenn der das Beleuchtungselement (45) im ersten (160) oder im zweiten Beleuchtungszustand (170) betrieben wird, insbesondere dass der erste (160) und/oder der zweite Beleuchtungszustand (170) nur in einer definierten Zeit während des Schrittes c) betrieben wird.

25. Verfahren nach einem der Ansprüche 18 bis 24,
**dadurch gekennzeichnet,**
**dass** Schritt c) innerhalb eines definierten Zeitfensters erfolgt, insbesondere wenn keine Gestik und/oder Handlung des Benutzers (10) innerhalb des definierten Zeitfensters erfolgt ist, der Schritt d) nicht ausgeführt wird.

26. Verfahren nach einem der Ansprüche 18 bis 25,
**dadurch gekennzeichnet,**
**dass** das Sensorsystem (30) Licht im für den Benutzer (10) nicht sichtbaren Bereich aussendet, insbesondere dass das Sensorsystem (30) gepulstes Licht aussendet.

27. Verfahren nach einem der Ansprüche 18 bis 26,
**dadurch gekennzeichnet,**
**dass** ein Anzeigeelement (43) vorgesehen ist, das für den Schritt c) Licht im sichtbaren Bereich aussendet, um einen Betätigungsbereich (22) für den Benutzer (10) zu schaffen, insbesondere dass der Betätigungsbereich (22) im Detektionsbereich (21) liegt.

28. Verfahren nach einem der Ansprüche 18 bis 27,
**dadurch gekennzeichnet,**
**dass** das Sensorsystem (30) einen Sensor (50) aufweist, der Licht (44) aus dem Detektionsbereich (21) und/oder Betätigungsbereich (22) empfängt, wobei das Sensorsystem (30) eine Kontrolleinheit (60) aufweist, die Daten des Sensors (50) auswertet.

29. Verfahren nach einem der Ansprüche 18 bis 28,
**dadurch gekennzeichnet,**
**dass** das Sensorsystem (30) ein Lichtmodul (40) aufweist, das Licht (44) emittiert, so dass ein Sendebereich entsteht, wobei der Sensor (50) einen Empfangsbereich aufweist, der sich mit dem Sendebereich zumindest teilweise überschneidet, wobei der Bereich der Überschneidung den Detektionsbereich (21) bildet.

30. Verfahren nach einem der Ansprüche 18 bis 29,
**dadurch gekennzeichnet,**
**dass** das Sensorsystem (30) eine Vielzahl an Lichtbündel (44), insbesondere Lichtkegel (44), emittiert, die zusammengesetzt den Detektionsbereich (21) bilden.

31. Verfahren nach einem der Ansprüche 18 bis 30,
**dadurch gekennzeichnet,**
**dass** das Sensorsystem (30) eine Überprüfung einer Abstandsänderung durchführt, um im Detektionsbereich (21) und/oder im Betätigungsbereich (22) einen Benutzer zu erkennen, der sich dem Kraftfahrzeug (1) nähert, insbesondere dass das Sensorsystem (30) erst dann eine Überprüfung einer Abstandsänderung durchführt, wenn der Benutzer (10) sich in der Nahzone (23) befindet.

32. Verfahren nach einem der Ansprüche 18 bis 31,
**dadurch gekennzeichnet,**
**dass** das Sensorsystem (30) Bilder des Detektionsbereiches (21) und/oder des Betätigungsbereiches (22) empfängt und/oder aufnimmt, wobei die Bilder gepulste Bilder und ungepulste Bilder sind, wobei die gepulsten Bilder durch die Reflexion des emittierten, gepulsten Lichts des Sensorsystems (30) entstehen und die ungepulsten Bilder durch das Licht des Detektionsbereiches (21) und/oder Betätigungsbereiches (22) entstehen, insbesondere dass für die Überprüfung einer Abstandsänderung die gepulsten Bilder mit den ungepulsten Bildern verglichen werden.

33. Verfahren nach einem der Ansprüche 18 bis 32,
**dadurch gekennzeichnet,**
**dass** das Sensorsystem (30) zwischen einen Ruhemodus (31) und einem Arbeitsmodus (32) schaltbar ist, wobei das Sensorsystem (30) im Ruhemodus (31) solange geschaltet ist, bis der Benutzer (10) in die Nahzone (23) gelangt, insbesondere dass die Pulsfrequenz des emittierten Lichtes (44) im Ruhemodus (31) geringer ist als im Arbeitsmodus (32).

34. Verfahren nach einem der Ansprüche 18 bis 33,
**dadurch gekennzeichnet,**
**dass** jedes Bild sich aus einer definierten Gesamtzahl an Pixeln zusammensetzt, wobei für die Überprüfung des Detektionsbereiches (21) und/oder Betätigungsbereiches (22) nur eine Anzahl an Pixel überprüft wird, die geringer ist als die mögliche Gesamtzahl.

35. Verfahren nach einem der Ansprüche 18 bis 34,
**dadurch gekennzeichnet,**
**dass** während des Schritts b) der ID-Geber (13) einen Authentifizierungscode an ein Zugangskontrollsystem (14) des Kraftfahrzeuges (1) sendet und das Zugangskontrollsystem (14) den Authentifizierungscode mit einem gespeicherten Code vergleicht und im Falle einer Übereinstimmung ein Entriegelungssignal ausgelöst wird.

36. Verfahren nach einem der Ansprüche 18 bis 35,
**dadurch gekennzeichnet,**
**dass** Schritt d) nur im Falle einer definierten Bewegung des Benutzers oder eines Körperteils (11, 12) des Benutzers (10) im/am Betätigungsbereich (22) erfolgt, insbesondere dass das Körperteil (11, 12) ein Fuß (11) oder eine Hand (12) des Benutzers (10) ist.

37. Verfahren nach einem der Ansprüche 18 bis 36,
**dadurch gekennzeichnet,**
**dass** der Betätigungsbereich (22) in einem Abstand zum Boden (15) und zum Sensorsystem (30) sich befindet, wobei insbesondere der Betätigungsbereich (22) ungefähr auf gleicher Höhe zum Sensorsystem (30) sich befindet.

## Claims

1. Emblem (80) for a motor vehicle (1), with
an optical sensor system (30, 70), wherein the optical sensor system (30, 70) is formed in the emblem (80), the optical sensor system (30, 70) being suitable
a) to monitor a detection area (21) located outside the motor vehicle (1),
b) in the event of detection of a user (10) in the detection area (21), to trigger a signal for starting an authentication check between an ID transmitter (13) and the motor vehicle (1),
c) to monitor an operating area (22) located outside the motor vehicle (1) and differing from the detection area (21),
d) to provide an operating signal for the motor vehicle (1) in the event of detection of a user (10) in the operating area (22),
wherein the optical sensor system (30) has an optical sensor (50) and a light module (40) with which light (44) can be emitted in order to produce the detection area (21), the sensor (50) being designed to receive light from the detection area (21) and/or the operating area (22), the detection area (21) not being visible to the user (10).

2. Emblem (80) according to claim 1,
**characterized in that**,
the sensor system (30, 70) is suitable for switching on a lighting element (45) arranged on the sensor system (30, 70) for a first lighting state (160) if the authentication check according to b) is positive.

3. Emblem (80) according to claim 2,
**characterized in that**,
when the sensor system (30) monitors the operating area (22), the lighting element (45) changes into a second lighting state.

4. Emblem (80) according to one of claims 2 to 3,
**characterized in that**,
the operating area (22) is located in the vicinity, adjacent to and/or at a distance from the lighting element (45) or on the lighting element (45), the lighting element (45) in particular being of annular and/or star-shaped design.

5. Emblem (80) according to one of claims 2 to 4,
**characterized in that**,
according to d), in the event of detection of a user (10) in the operating area (22), the sensor system (30) is suitable for switching the lighting element (45) into a third lighting state (180) which is different from the first (160) and/or the second lighting state (170).

6. Emblem (80) according to one of the preceding claims,
**characterized in that**,
the sensor system (30, 70) comprises a proximity sensor or a touch sensor or a capacitive sensor (70).

7. Emblem (80) according to one of the preceding claims,
**characterized in that**,
the light module (40) comprises a plurality of light sources (41).

8. Emblem (80) according to one of the preceding claims,
**characterized in that**,
the optical sensor system (30, 70) has a proximity sensor or a touch sensor or a capacitive sensor (70) in order to create the detection area (21) and/or to monitor the detection area (21).

9. Emblem (80) according to one of the preceding claims,
**characterized in that**,
a display element (43) is provided in order to create the operating area (22), the operating area (22) in particular being visible to the user (10).

10. Emblem (80) according to one of the preceding claims,
**characterized in that**,
the sensor system (30) is designed in such a way that the detection area (21) is divided into at least two zones (23, 24), a near zone (23) and a far zone (24), the near zone (23) being at a shorter distance from the sensor system (30) than the far zone (24), with the user (10) only being detected in accordance with step b) when the user (10) is located in the near zone (23).

11. Emblem (80) according to one of the preceding claims,
**characterized in that**,
the light module (40) and/or a sensor (50) have a lens system (51), the lens system (51) in particular having a filter and/or **in that** the sensor system (30) has a rigid lens system (51).

12. Emblem (80) according to one of the preceding claims,
**characterized in that**,
the emblem (80) is arranged in a receptacle (25) which is designed for mounting the emblem (80) on the motor vehicle (1), and/or **in that** the emblem (80) has a plurality of independent fields (81), at least one of the following components being arranged in each field (81): Light module (40), display element (43), optical sensor (50), lighting element (45), capacitive sensor (70), an emergency actuation (90) with activation means (91).

13. Emblem (80) according to one of the preceding claims,
**characterized in that**,
the emblem (80) is suitable for being attached to the rear (82) or a side of the motor vehicle, in particular that the emblem (80) is movable.

14. Emblem (80) according to one of the preceding claims,
**characterized in that**,
the optical sensor system (30) comprises a sensor (50), wherein the optical sensor (50) is an LDPD sensor or a camera.

15. Emblem (80) according to one of the preceding claims,
**characterized in that**,
the sensor system (30) is designed such that the detection area (21) is located at least partially above a floor surface (15) on which the motor vehicle (1) is standing.

16. Emblem (80) according to one of the preceding claims,
**characterized in that**,
the operating signal is a signal for unlocking and/or locking and/or opening and/or closing a movable part of the motor vehicle (2, 3), in particular the movable part being a tailgate (2) or a side door (3) or a sliding door.

17. Emblem (80) according to one of the preceding claims,
**characterized in that**,
a display element (43) is provided in order to create the operating area (22), the light module (40) and the display element (43) and/or a lighting element (45) being aligned in such a way that the operating area (22) is located closer to the motor vehicle (1) than the detection area (21), in particular **in that** two operating areas are provided.

18. Method, which in particular operates an emblem (80) according to one of claims 1 to 17, for triggering an operating signal for a motor vehicle (1), with an emblem (80) which has an optical sensor system (30), the sensor system (30) carrying out the following steps:
a) Monitoring of a detection area (21) located outside the motor vehicle (1),
b) in the event of detection of a user (10) in the detection area (21), triggering of a signal for starting an authentication check between an ID transmitter (13) and the motor vehicle (1),
c) Monitoring of an operating area (22) located outside the motor vehicle (1) and differing from the detection area (21),
d) in the event of detection of a user (10) in the operating area (22), provision of the operating signal for the motor vehicle (1),
wherein the optical sensor system (30, 70) is formed in the emblem (80), wherein
- the optical sensor system (30) comprises an optical sensor (50) and a light module (40) with which light (44) is emitted to create the detection area (21), wherein
- the sensor (50) receives light from the detection area (21) and/or the operating area (22), wherein the detection area (21) is not visible to the user (10).

19. Method according to claim 18,
**characterized in that**,
after a positive authentication according to b), a lighting element (45) arranged on the sensor system (30) is operated in a first lighting state (160).

20. Method according to claim 19,
**characterized in that**,
according to c) the lighting element (45) is operated in a second lighting state (170) which is different from the first lighting state (160).

21. Method according to claim 19 or 20,
**characterized in that**,
according to step d), the lighting element (45) is operated in a third lighting state (180) which is different from the first (160) and/or the second lighting state (170), in particular an opening operation of a movable part (2, 3) of the motor vehicle (1) being carried out.

22. Method according to one of the claims 18 to 21,
**characterized in that**,
the detection area (21) is divided into at least two zones (23, 24), into a near zone (23) and a far zone (24), the near zone (23) being at a shorter distance from the sensor system (30) than the far zone (24), with the user (10) being detected according to step b) only when the user (10) is located in the near zone (23), in particular **in that** the detection area (21) is permanently monitored and/or **in that** step b) is carried out when the user is located in the near zone (23).

23. Method according to one of the claims 18 to 22,
**characterized in that**,
the detection of the user (10) according to step c) or d) requires a defined gesture and/or action of the user (10).

24. Method according to one of the claims 18 to 23,
**characterized in that**,
the provision of the operating signal according to step d) only takes place when the lighting element (45) is operated in the first (160) or in the second lighting state (170), in particular **in that** the first (160) and/or the second lighting state (170) is operated only in a defined time during step c).

25. Method according to one of the claims 18 to 24,
**characterized in that**,
step c) takes place within a defined time window, in particular if no gesture and/or action of the user (10) has taken place within the defined time window, step d) is not carried out.

26. Method according to one of the claims 18 to 25,
**characterized in that**,
the sensor system (30) emits light in the range not visible to the user (10), in particular **in that** the sensor system (30) emits pulsed light.

27. Method according to one of the claims 18 to 26,
**characterized in that**,
a display element (43) is provided which, for step c), emits light in the visible range in order to create an operating area (22) for the user (10), in particular **in that** the operating area (22) is located in the detection area (21).

28. Method according to one of the claims 18 to 27,
**characterized in that**,
the sensor system (30) has a sensor (50) which receives light (44) from the detection area (21) and/or operating area (22), the sensor system (30) having a control unit (60) which evaluates data from the sensor (50).

29. Method according to one of the claims 18 to 28,
**characterized in that**,
the sensor system (30) has a light module (40) which emits light (44) so that a transmission range is produced, the sensor (50) having a reception range which at least partially overlaps with the transmission range, the area of overlap creating the detection area (21).

30. Method according to one of the claims 18 to 29,
**characterized in that**,
the sensor system (30) emits a plurality of fight beams (44), in particular light cones (44), which together form the detection area (21).

31. Method according to one of the claims 18 to 30,
**characterized in that**,
the sensor system (30) carries out a check of a change in distance in order to detect a user approaching the motor vehicle (1) in the detection area (21) and/or in the operating area (22), in particular **in that** the sensor system (30) only carries out a check of a change in distance when the user (10) is located in the near zone (23).

32. Method according to one of the claims 18 to 31,
**characterized in that**,
the sensor system (30) receives and/or records images of the detection area (21) and/or of the operating area (22), the images being pulsed images and unpulsed images, the pulsed images being produced by the reflection of the emitted, pulsed light of the sensor system (30) and the unpulsed images being produced by the light of the detection area (21) and/or operating area (22), in particular **in that** the pulsed images are compared with the unpulsed images in order to check a change in distance.

33. Method according to one of the claims 18 to 32,
**characterized in that**,
the sensor system (30) can be switched between a sleep mode (31) and an operating mode (32), the sensor system (30) being switched in the sleep mode (31) until the user (10) reaches the near zone (23), in particular **in that** the pulse frequency of the emitted light (44) is lower in the sleep mode (31) than in the operating mode (32).

34. Method according to one of the claims 18 to 33,
**characterized in that**,
each image is composed of a defined total number of pixels, only a number of pixels which is less than the possible total number being checked for checking the detection area (21) and/or operating area (22).

35. Method according to one of the claims 18 to 34,
**characterized in that**,
during step b) the ID transmitter (13) transmits an authentication code to an access control system (14) of the motor vehicle (1) and the access control system (14) compares the authentication code with a stored code and an unlocking signal is triggered in the event of a match.

36. Method according to one of the claims 18 to 35,
**characterized in that**,
step d) takes place only in the event of a defined movement of the user or a body part (11, 12) of the user (10) in/at the operating area (22), in particular **in that** the body part (11, 12) is a foot (11) or a hand (12) of the user (10).

37. Method according to one of the claims 18 to 36,
**characterized in that**,
the operating area (22) is located at a distance from the floor (15) and from the sensor system (30), the operating area (22) in particular being located at approximately the same height as the sensor system (30).

## Revendications

1. Emblème (80) pour un véhicule automobile (1), avec
un système de capteur optique (30, 70), dans lequel le système de capteur optique (30, 70) est formé dans l'emblème (80), le système de capteur optique (30, 70) étant approprié
a) pour surveiller une zone de détection (21) située à l'extérieur du véhicule automobile (1),
b) en cas de détection d'un utilisateur (10) dans la zone de détection (21), de déclencher un signal pour lancer un contrôle d'authentification entre un émetteur d'identification (13) et le véhicule automobile (1),
c) pour surveiller une zone d'actionnement (22) située à l'extérieur du véhicule automobile (1) et différente de la zone de détection (21),
d) de fournir un signal de fonctionnement pour le véhicule automobile (1) en cas de détection d'un utilisateur (10) dans la zone d'actionnement (22),
dans lequel le système de capteur optique (30) comporte un capteur optique (50) et un module de lumière (40) avec lequel de la lumière (44) peut être émise afin de produire la zone de détection (21), le capteur (50) étant conçu pour recevoir la lumière de la zone de détection (21) et/ou de la zone d'actionnement (22), la zone de détection (21) n'étant pas visible pour l'utilisateur (10).

2. Emblème (80) selon la revendication 1,
**caractérisé en ce que**
le système de capteur (30, 70) est adapté pour allumer un élément d'éclairage (45) disposé sur le système de capteur (30, 70) pour un premier état d'éclairage (160) si le contrôle d'authentification selon l'étape b) est positif.

3. Emblème (80) selon la revendication 2,
**caractérisé en ce que**
lorsque le système de capteur (30) surveille la zone d'actionnement (22), l'élément d'éclairage (45) passe dans un deuxième état d'éclairage.

4. Emblème (80) selon l'une des revendications 2 à 3,
**caractérisé en ce que**
la zone d'actionnement (22) est située à proximité, à côté et/ou à distance de l'élément d'éclairage (45) ou sur l'élément d'éclairage (45), l'élément d'éclairage (45) étant en particulier de forme annulaire et/ou en étoile.

5. Emblème (80) selon l'une des revendications 2 à 4,
**caractérisé en ce que**
selon l'étape d), en cas de détection d'un utilisateur (10) dans la zone d'actionnement (22), le système de capteur (30) est adapté pour commuter l'élément d'éclairage (45) dans un troisième état d'éclairage (180) qui est différent du premier (160) et/ou du deuxième état d'éclairage (170).

6. Emblème (80) selon l'une des revendications précédentes,
**caractérisé en ce que**
le système de capteur (30, 70) comprend un capteur de proximité ou un capteur tactile ou un capteur capacitif (70).

7. Emblème (80) selon l'une des revendications précédentes,
**caractérisé en ce que**
le module de lumière (40) comprend une pluralité de sources lumineuses (41).

8. Emblème (80) selon l'une des revendications précédentes,
**caractérisé en ce que**
le système de capteur optique (30, 70) comporte un capteur de proximité ou un capteur tactile ou un capteur capacitif (70) afin de créer la zone de détection (21) et/ou de surveiller la zone de détection (21).

9. Emblème (80) selon l'une des revendications précédentes,
**caractérisé en ce**
**qu'**un élément d'affichage (43) est prévu afin de créer la zone d'actionnement (22), la zone d'actionnement (22) étant notamment visible par l'utilisateur (10).

10. Emblème (80) selon l'une des revendications précédentes,
**caractérisé en ce que**
le système de capteur (30) est conçu de telle sorte que la zone de détection (21) est divisée en au moins deux zones (23, 24), une zone proche (23) et une zone éloignée (24), la zone proche (23) étant à une distance plus courte du système de capteur (30) que la zone éloignée (24), l'utilisateur (10) n'étant détecté conformément à l'étape b) que lorsqu'il se trouve dans la zone proche (23).

11. Emblème (80) selon l'une des revendications précédentes,
**caractérisé en ce que**
le module de lumière (40) et/ou un capteur (50) comportent un système de lentille (51), le système de lentille (51) comportant notamment un filtre et/ou **en ce que** le système de capteur (30) comporte un système de lentille rigide (51).

12. Emblème (80) selon l'une des revendications précédentes,
**caractérisé en ce que**
l'emblème (80) est disposé dans un réceptacle (25) qui est conçu pour le montage de l'emblème (80) sur le véhicule automobile (1), et/ou **en ce que** l'emblème (80) présente plusieurs champs indépendants (81), au moins un des composants suivants étant disposé dans chaque champ (81) : Module de lumière (40), élément d'affichage (43), capteur optique (50), élément d'éclairage (45), capteur capacitif (70), un moyen d'actionnement d'urgence (90) avec des moyens d'activation (91).

13. Emblème (80) selon l'une des revendications précédentes,
**caractérisé en ce que**
l'emblème (80) peut être fixé à l'arrière (82) ou sur un côté du véhicule automobile, en particulier que l'emblème (80) est mobile.

14. Emblème (80) selon l'une des revendications précédentes,
**caractérisé en ce que**
le système de capteur optique (30) comprend un capteur (50), le capteur optique (50) étant un capteur LDPD ou une caméra.

15. Emblème (80) selon l'une des revendications précédentes,
**caractérisé en ce que**
le système de capteur (30) est conçu de telle sorte que la zone de détection (21) se trouve au moins partiellement au-dessus d'une surface de plancher (15) sur laquelle se trouve le véhicule automobile (1).

16. Emblème (80) selon l'une des revendications précédentes,
**caractérisé en ce que**
le signal de fonctionnement est un signal de déverrouillage et/ou de verrouillage et/ou d'ouverture et/ou de fermeture d'une partie mobile du véhicule automobile (2, 3), en particulier la partie mobile étant un hayon (2) ou une porte latérale (3) ou une porte coulissante.

17. Emblème (80) selon l'une des revendications précédentes,
**caractérisé en ce**
**qu'**un élément d'affichage (43) est prévu pour créer la zone d'actionnement (22), le module de lumière (40) et l'élément d'affichage (43) et/ou un élément d'éclairage (45) étant orientés de telle sorte que la zone d'actionnement (22) soit située plus près du véhicule automobile (1) que la zone de détection (21), en particulier **en ce que** deux zones d'actionnement sont prévues.

18. Procédé, qui fait notamment fonctionner un emblème (80) selon l'une des revendications 1 à 17, pour déclencher un signal de fonctionnement pour un véhicule automobile (1), avec un emblème (80) qui présente un système de capteur optique (30), le système de capteur (30) effectuant les étapes suivantes :
a) Surveillance d'une zone de détection (21) située à l'extérieur du véhicule automobile (1),
b) en cas de détection d'un utilisateur (10) dans la zone de détection (21), déclenchement d'un signal pour lancer un contrôle d'authentification entre un émetteur d'identification (13) et le véhicule automobile (1),
c) Surveillance d'une zone d'actionnement (22) située à l'extérieur du véhicule automobile (1) et différente de la zone de détection (21),
d) en cas de détection d'un utilisateur (10) dans la zone d'actionnement (22), fourniture du signal de fonctionnement pour le véhicule automobile (1),
dans lequel le système de capteur optique (30, 70) est formé dans l'emblème (80), dans lequel
- le système de capteur optique (30) comprend un capteur optique (50) et un module de lumière (40) avec lequel la lumière (44) est émise pour créer la zone de détection (21), dans lequel
- le capteur (50) reçoit de la lumière de la zone de détection (21) et/ou de la zone d'actionnement (22), la zone de détection (21) n'étant pas visible pour l'utilisateur (10).

19. Procédé selon la revendication 18,
**caractérisé en ce**
**qu'**après une authentification positive selon l'ètape b), un élément d'éclairage (45) disposé sur le système de capteur (30) fonctionne dans un premier état d'éclairage (160).

20. Procédé selon la revendication 19,
**caractérisé en ce que**
selon l'étape c), l'élément d'éclairage (45) fonctionne dans un deuxième état d'éclairage (170) qui est différent du premier état d'éclairage (160).

21. Procédé selon la revendication 19 ou 20,
**caractérisé en ce que**
selon l'étape d), l'élément d'éclairage (45) est actionné dans un troisième état d'éclairage (180) qui est différent du premier (160) et/ou du deuxième état d'éclairage (170), en particulier une opération d'ouverture d'une partie mobile (2, 3) du véhicule automobile (1) étant effectuée.

22. Procédé selon l'une des revendications 18 à 21,
**caractérisé en ce que**
la zone de détection (21) est divisée en au moins deux zones (23, 24), en une zone proche (23) et une zone éloignée (24), la zone proche (23) étant à une distance plus courte du système de capteur (30) que la zone éloignée (24), l'utilisateur (10) étant détecté selon l'étape b) lorsque l'utilisateur (10) se trouve dans la zone proche (23), en particulier **en ce que** la zone de détection (21) est surveillée en permanence et/ou **en ce que** l'étape b) est exécutée lorsque l'utilisateur se trouve dans la zone proche (23).

23. Procédé selon l'une des revendications 18 à 22,
**caractérisé en ce que**
le détection de l'utilisateur (10) selon l'étape c) ou d) nécessite un geste et/ou une action définis de l'utilisateur (10).

24. Procédé selon l'une des revendications 18 à 23,
**caractérisé en ce que**
la fourniture du signal de fonctionnement selon l'étape d) n'a lieu que lorsque l'élément d'éclairage (45) est actionné dans le premier (160) ou dans le deuxième état d'éclairage (170), en particulier **en ce que** le premier (160) et/ou le deuxième état d'éclairage (170) n'est actionné que pendant un temps défini lors de l'étape c).

25. Procédé selon l'une des revendications 18 à 24,
**caractérisé en ce que**
l'étape c) a lieu dans une fenêtre de temps définie, en particulier si aucun geste et/ou action de l'utilisateur (10) n'a eu lieu dans la fenêtre de temps définie, l'étape d) n'est pas exécutée.

26. Procédé selon l'une des revendications 18 à 25,
**caractérisé en ce que**
le système de capteur (30) émet de la lumière dans la plage non visible par l'utilisateur (10), en particulier **en ce que** le système de capteur (30) émet une lumière pulsée.

27. Procédé selon l'une des revendications 18 à 26,
**caractérisé en ce**
**qu'**il est prévu un élément d'affichage (43) qui, pour l'étape c), émet de la lumière dans le domaine visible afin de créer une zone d'actionnement (22) pour l'utilisateur (10), en particulier **en ce que** la zone d'actionnement (22) se trouve dans la zone de détection (21).

28. Procédé selon l'une des revendications 18 à 27,
**caractérisé en ce que**
le système de capteur (30) comporte un capteur (50) qui reçoit la lumière (44) de la zone de détection (21) et/ou de la zone d'actionnement (22), le système de capteur (30) comportant une unité de commande (60) qui évalue les données du capteur (50).

29. Procédé selon l'une des revendications 18 à 28,
**caractérisé en ce que**
le système de capteur (30) comporte un module de lumière (40) qui émet de la lumière (44) de manière à créer une portée de transmission, le capteur (50) comportant une portée de réception qui chevauche au moins partiellement la portée de transmission, la zone de chevauchement formant la zone de détection (21).

30. Procédé selon l'une des revendications 18 à 29,
**caractérisé en ce que**
le système de capteur (30) émet une pluralité de faisceaux lumineux (44), en particulier des cônes lumineux (44), qui forment ensemble la zone de détection (21).

31. Procédé selon l'une des revendications 18 à 30,
**caractérisé en ce que**
le système de capteur (30) effectue un contrôle d'une modification de la distance afin de détecter un utilisateur s'approchant du véhicule automobile (1) dans la zone de détection (21) et/ou dans la zone d'actionnement (22), en particulier **en ce que** le système de capteur (30) n'effectue un contrôle d'une modification de la distance que lorsque l'utilisateur (10) se trouve dans la zone proche (23).

32. Procédé selon l'une des revendications 18 à 31,
**caractérisé en ce que**
le système de capteur (30) reçoit et/ou enregistre des images de la zone de détection (21) et/ou de la zone d'actionnement (22), les images étant des images pulsées et des images non pulsées, les images pulsées étant produites par la réflexion de la lumière émise et pulsée du système de capteur (30) et les images non pulsées étant produites par la lumière de la zone de détection (21) et/ou de la zone d'actionnement (22), en particulier **en ce que** les images puisées sont comparées aux images non pulsées afin de vérifier une modification de la distance.

33. Procédé selon l'une des revendications 18 à 32,
**caractérisé en ce que**
le système de capteur (30) peut être commuté entre un mode de veille (31) et un mode de fonctionnement (32), le système de capteur (30) étant commuté en mode de veille (31) jusqu'à ce que l'utilisateur (10) atteigne la zone proche (23), en particulier **en ce que** la fréquence d'impulsion de la lumière émise (44) est plus faible en mode de veille (31) qu'en mode de fonctionnement (32).

34. Procédé selon l'une des revendications 18 à 33,
**caractérisé en ce que**
chaque image est composée d'un nombre total défini de pixels, seul un nombre de pixels inférieur au nombre total possible étant contrôlé pour vérifier la zone de détection (21) et/ou la zone d'actionnement (22).

35. Procédé selon l'une des revendications 18 à 34,
**caractérisé en ce que**
lors de l'étape b), l'émetteur d'identification (13) transmet un code d'authentification à un système de contrôle d'accès (14) du véhicule automobile (1) et le système de contrôle d'accès (14) compare le code d'authentification avec un code mémorisé et un signal de déverrouillage est déclenché en cas de concordance.

36. Procédé selon l'une des revendications 18 à 35,
**caractérisé en ce que**
l'étape d) n'a lieu qu'en cas de mouvement défini de l'utilisateur ou d'une partie du corps (11, 12) de l'utilisateur (10) dans / au niveau de la zone d'actionnement (22), notamment **en ce que** la partie du corps (11, 12) est un pied (11) ou une main (12) de l'utilisateur (10).

37. Procédé selon l'une des revendications 18 à 36,
**caractérisé en ce que**
la zone d'actionnement (22) est située à une certaine distance du plancher (15) et du système de capteur (30), la zone d'actionnement (22) en particulier étant située à peu près à la même hauteur que le système de capteur (30).
